# FASCICULE DE BREVET EUROPEEN

(11) **EP 2 833 981 B1**
(45) Date de publication et mention de la délivrance du brevet: **15.04.2020**
(21) Numéro de dépôt: 13713219.7
(22) Date de dépôt: 02.04.2013
(51) Int. Cl.: C02F 1/10, C02F 103/08, B01D 3/42, B01D 3/14, B01D 3/34

(54) **DISTILLATEURS D'EAU A COURANTS D'AIR SATURE**
WASSERDESTILLATIONSVORRICHTUNG UNTER VERWENDUNG GESÄTTIGTER LUFTSTRÖME
WATER DISTILLING APPARATUS USING SATURATED AIR CURRENTS

(30) Priorité: 03.04.2012 FR 1200985
(43) Date de publication de la demande: 11.02.2015
(73) Titulaire: TMW, 75017 Paris (FR)
(72) Inventeur: DOMEN, Jean-Paul, F-49320 Vauchretien (FR); VIANNAY, Stéphane, F-49190 Saint Aubin De Luigne (FR); BOISDON, Olivier, F-49170 Saint Leger Des Bois (FR); DIMECK, Florian, F-49100 Angers (FR)
(74) Mandataire: Hirsch & Associés
(86) Numéro de dépôt international: PCT/EP2013/056964
(87) Numéro de publication internationale: WO 2013/150040

(56) Documents cités:
- FR-A1- 2 281 896
- FR-A1- 2 960 288
- US-A- 3 860 492
- US-A- 4 915 792
- US-A1- 2002 166 758
- US-A1- 2011 210 457

## Description

L'invention concerne à la fois des distillateurs d'eau perfectionnés, du genre à courants forcés d'air chaud humide saturé et récupération de chaleur latente de condensation. Les applications de ces distillateurs comprennent le dessalement de l'eau de mer et, plus généralement, la déminéralisation de toute eau claire, notamment pour produire de l'eau ultra pure. Elles concernent également la concentration de solutions aqueuses industrielles diverses, à transformer (agroalimentaires) ou à détruire (effluents pollués) ainsi que la séparation de certains liquides volatils de leur solvant aqueux (éthanols, acides, bases...).

Deux distillateurs d'eau, à courants forcés d'air chaud humide saturé et récupération de chaleur latente de condensation, sont décrits en commentaires (1) de la figure 5 d'une demande de brevet français de 1975, publiée sous le N°2 281 896, et (2) d'un brevet US 3 860 492 de la même année.

Dans le distillateur d'eau selon cette demande de brevet français,
- trois étages de distillation superposés sont aménagés ;
- chaque étage de distillation comprend un couple de chambres, l'une d'évaporation et l'autre de condensation, les hauts de ces chambres communiquant par un conduit ;
- les conduits des deux étages de distillation inférieurs comportent des moyens manuels de réglage de leurs sections de passage ;
- les trois chambres d'évaporation sont garnies de noix artificielles mouillables, entassées en vrac ;
- les trois chambres de condensation comportent trois serpentins montés en série ;
- des moyens sont raccordés à l'appareil pour faire circuler, de bas en haut dans les trois serpentins des chambres de condensation, un courant d'eau à température initiale basse ;
- une chaudière est raccordée en haut de ces serpentins pour porter à une température haute de 95°C, le courant d'eau qui en sort;
- des moyens d'épandage sont installés au-dessus de la chambre d'évaporation supérieure pour répandre cette eau, à température haute, au sommet de cette chambre ;
- un ventilateur est installé en bas de la chambre d'évaporation inférieure, pour forcer des débits ajustés d'air chaud humide saturé à circuler, de bas en haut dans les trois chambres d'évaporation et de haut en bas dans les trois chambres de condensation, afin de faire prendre des températures prédéterminées aux courants d'air circulant en haut des chambres d'évaporation ;
- des moyens, pour recueillir l'eau distillée et la solution aqueuse concentrée, sont respectivement installés en bas des chambres basses de condensation et d'évaporation.

Ce distillateur d'eau a été aménagé pour former ces trois étages de distillation, afin d'améliorer les échanges thermiques entre des courants d'eau chaude et d'air ou d'air chaud et d'eau, circulant en sens opposés, effectués dans les chambres d'évaporation et de condensation de l'appareil. Une telle solution (non justifiée dans le document) est en effet nécessaire car, en fonction de la température, la capacité calorifique Cp_{E} d'un kilogramme d'eau est constante (4,18 kJ/K), alors que la capacité calorifique apparente Cp_{A} d'un kilogramme d'air sec à pression standard, inclus dans de l'air chaud humide saturé, augmente avec la température et présente une branche hyperbolique, qui tend vers l'infini à 100°C. Avec trois étages de distillation, on transforme en deux suites de trois festons la paire de courbes représentatives des flux d'enthalpie de l'air montant et descendant. Dans ces conditions, on minimise grandement les écarts entre, d'une part, ces deux suites de festons et, d'autre part, les deux droites parallèles représentatives des flux d'enthalpie de l'eau montante et descendante. L'échange thermique total ainsi effectué est nettement supérieur à ce qu'il aurait été avec un seul étage de distillation et la quantité d'eau distillée produite est, dans ces conditions, fortement augmentée. Mais les performances d'un tel distillateur d'eau sont cependant loin d'être maximales.

En effet, dans ce distillateur d'eau, avec un courant d'air à température initiale T_{A0} = 20°C et un courant d'eau à températures, basse T_{E0} = 20°C et haute T_{E2} = 95°C, on a, en haut des trois étages de distillation de rangs 1 à 3, pour de l'air circulant en boucle ouverte : T_{A1} = 55°C, T_{A2} = 75°C, T_{A3} = 90°C et 35°C, en bas de la colonne de condensation. Pour l'eau circulant en boucle ouverte, en bas des trois chambres d'évaporation, on a du sommet à la base de la colonne d'évaporation : T_{E2}, 85°C, 65°C et T_{E3} = 40°C. En haut des trois chambres de condensation, on a pour l'eau, de la base au sommet de la colonne de condensation : T_{E0}, 45°C, 65°C et T_{E1} = 75°C. Dans ces conditions, le Coefficient de Performances de l'appareil (rapport entre l'énergie thermique utilisée en distillation et l'énergie thermique fournie par la chaudière) CoP = (T_{E2} - T_{E0}) / (T_{E2} - T_{E1}) = 3,75, ce qui est une valeur moyenne, acceptable lorsque l'énergie utilisée est bon marché. Mais, ce CoP calculé est-il possible avec l'appareil décrit ?

Pour voir ce qu'il en est, on va s'intéresser de plus près aux températures annoncées pour l'air et pour l'eau. Et l'on va s'apercevoir que ces températures (à l'évidence non expérimentales) ne sont pas adaptées à l'obtention de performances moyennes et a fortiori élevées, aussi bien techniques qu'économiques. Il en est tout d'abord ainsi pour les températures de l'air en haut des chambres d'évaporation et en bas des chambres de condensation des trois étages de distillation.

Dans un premier temps, il s'agit du choix des deux températures intermédiaires T_{A1} et T_{A2} de l'air, en haut des chambres d'évaporation de rang 1 et 2. Ce choix est normalement fait à partir des températures extrêmes de l'air : la basse T_{A0}, imposée par l'air ambiant, et la haute T_{A3}, relativement proche de T_{E2}, la température haute de l'eau répandue au sommet de la chambre d'évaporation supérieure. Du fait des trois étages de distillation aménagés dans l'appareil, la courbe souhaitée pour représenter les flux d'enthalpie corrigés des courants d'air chaud humide saturé montant dans les trois chambres d'évaporation, est une suite idéale de trois segments de droite à pentes A = ΔH/ΔT, avec ΔH et ΔT, les accroissements de flux d'enthalpie et de température de l'air dans chacune des chambres d'évaporation. En fait, la courbe réelle représentant ces flux corrigés est constituée par trois festons ayant deux points de jonction anguleux. L'écart maximal entre ces deux courbes, réelle et optimale, est la flèche ΔT_{F} de chaque feston. Pour chaque feston, la valeur en degrés de sa flèche ΔT_{F} est le quotient ΔH*/A, avec ΔH* l'écart de flux d'enthalpie, entre le milieu du segment de droite recherché et le point de la courbe de flux d'enthalpie de l'air, à la température moyenne de la chambre. Dans le cas des températures extrêmes de l'air chaud humide saturé, en bas et en haut des chambres d'évaporation, annoncées dans le brevet concerné, à savoir 30 (environ), 55, 75 et 90°C, les valeurs des flux d'enthalpie de 1kg/s d'air sec, emporté par le courant d'air chaud humide saturé montant dans chaque chambre d'évaporation, sont données par la table de l'enthalpie spécifique H de l'air chaud humide saturé. Pour les températures remarquables de l'air humide (extrémités et milieu des segments de droite), on a H₉₀ = 3887 kW; H_{82,5} = 1864 ; H₇₅ = 1088 ; H₆₅ = 600 ; H₅₅ = 353; H_{42,5} = 179 et H₃₀ = 100 kW. Pour le feston inférieur, on a ΔH₁* = ½ (H₅₅ + H₃₀) - H_{42,5} = 48 kW et A₁ = (H₅₅ - H₃₀) / 25 = 10 kW/K, de sorte que ΔT_{F1} = 4,8°C. Pour le feston central, on a ΔH₂* = 120 kW, A₂ = 37 kW/K et ΔT_{F2} = 3,2 °C. Pour le feston supérieur, on a ΔH₃* = 623 kW, A₃ = 187 kW/K et ΔT_{F3} = 3,3 °C. Toutes ces valeurs sont inacceptables, parce que trop élevées. Mais la flèche ΔT_{F1} du feston inférieur étant la plus importante, elle est, de ce fait, la seule à être prise en compte pour déterminer (T_{E2} - T_{E1}). Elle représente ici le quart de l'accroissement de température imposé à la chaudière, ce qui diminue d'autant le CoP de l'appareil. En conclusion de ces premiers commentaires, on voit que dans un distillateur d'eau efficace, le nombre d'étages de distillation et le choix des températures de l'air au sommet des chambres d'évaporation ne peuvent pas être décidés par une approche arbitraire, même si celle-ci paraît être de bon sens.

En ce qui concerne les températures en bas des chambres de condensation, il n'y a aucune raison pour que les températures du courant d'air dérivé par les deux communications entre les chambres d'évaporation et de condensation de rangs 1 et 2, et les températures des courants d'air descendant des chambres de condensation de rang 2 et 3 soient les mêmes. En effet, les architectures des deux chambres d'un étage de distillation étant différentes l'une de l'autre, a priori leurs coefficients d'échange thermique respectifs le sont également. L'inégalité de ces températures engendre une baisse du CoP, si elle n'est pas corrigée.

En outre, comme la forme et les dimensions des sections des conduits débouchant dans les chambres de condensation, tout comme la forme de la section de ces chambres, ne sont pas précisées, on ignore les conditions exactes dans lesquelles les courants d'air dérivés par ces conduits aboutissent dans ces chambres et se mélangent aux courants d'air descendant des chambres de rang supérieur. De toute façon, les veines d'air qui lèchent les serpentins sont a priori très minoritaires par rapport à celles qui en sont écartées. Ce qui engendre localement des couplages thermiques air/eau déséquilibrés, très différents les uns des autres. Globalement l'air chaud humide saturé est très mal refroidi et la vapeur très mal condensée dans des chambres de condensation équipées de serpentins. Pour qu'il en soit autrement, il faut que la surface volumique S/V d'échange thermique de ces serpentins soit importante dans la chambre de condensation. Comme un tel rapport est S/V > 150 m²/m³ pour des échanges thermiques air/eau efficaces, on voit que cela est inconcevable pour des serpentins usuels, en zigzag ou en hélice, pour lesquels S/V < 10 m²/m³. La situation est meilleure lorsque plusieurs serpentins ou tronçons de serpentins sont assemblés en parallèle, avec collecteurs amont et aval. Ce que le document cité ne suggère pas. De toute façon, la structure filiforme des serpentins usuels entraîne une perte de charge souvent inacceptable pour le courant d'eau. En outre, leur coût est souvent prohibitif du fait que, étant a priori métalliques, leur métal doit être insensible à l'action corrosive de l'eau de mer. La conclusion de ces commentaires est simple : les serpentins métalliques usuels ne sont absolument pas adaptés à la double fonction qui leur est affectée dans un distillateur d'eau, à hautes performances (CoP > 4), à savoir : réchauffer efficacement un courant d'eau de mer montant par un courant descendant d'air chaud humide saturé et condenser le maximum de vapeur d'eau emportée par ce courant d'air, dans des conditions économiques satisfaisantes pour les marchés concernés.

Par ailleurs, l'entassement de noix artificielles mouillables dans la colonne d'évaporation conduit à des pertes de charge importantes pour le courant d'air, insufflé par le ventilateur installé en bas de cette colonne. Cela entraîne pour ce courant d'air, l'obligation d'une surpression relativement importante et des vitesses locales élevées, qui se traduisent par la présence inévitable de gouttes de saumure dans les courants d'air entrant dans la colonne de condensation. Dans le cas d'un distillateur d'eau traitant de l'eau de mer standard, cela conduit à une teneur de 1 à 2 g de sel par litre d'eau distillée produite. Ce qui en rend la consommation désagréable. Dans le cas d'un distillateur d'eau traitant des eaux industrielles polluées, interdites à la décharge, la situation est pire : l'eau distillée reste polluée et interdite de rejet.

Pour terminer l'exposé des problèmes, posés par le distillateur d'eau décrit dans le document cité, on peut encore noter que la température T_{E2} = 95°C prévue, pour l'eau chaude à répandre en haut de la colonne d'évaporation, est une température trop importante, dangereuse à terme, car elle accélère la précipitation de certains sels dissous dans cette eau et, de ce fait, entraîne d'importants dépôts de tartre dans les passages empruntés, qui perturbent et à la longue finissent par bloquer le fonctionnement de la machine.

Le distillateur d'eau selon le brevet US 3 860 492 est aménagé en système automatique pour concentrer de l'eau industrielle. Il comprend un premier étage de distillation, matérialisé dans la moitié basse des deux colonnes, et un nombre indéterminé d'étages aménagé au-dessus. Les composants mouillables de la colonne d'évaporation sont des filets de pêche pendus et les composants creux d'échange thermique de la colonne de condensation, des serpentins. La plupart des commentaires négatifs précédents s'appliquent. De plus, la flèche du feston de la courbe d'enthalpie de l'air dans ce premier étage, est a priori notablement plus grande que celle du cas précédent. Un distillateur plus performant à huit étages est par ailleurs envisagé, sans plus de détails.

En conclusion des commentaires concernant ces deux documents, on peut affirmer qu'une condition majeure pour que le procédé concerné ait une bonne performance énergétique est que l'écart de température entre l'air humide et l'eau soit le plus faible possible tout le long des colonnes d'évaporation et de condensation. Le fait de découper chaque colonne en plusieurs étages, où les débits d'air humide sont différents et le débit d'eau pratiquement constant, permet déjà une réduction globale de l'écart de température entre l'air humide et l'eau. Les deux documents cités proposent une telle solution. Le brevet français ne donne pas d'explication. Le brevet US donne une explication partielle à partir de la courbe d'évolution, en fonction de la température, de l'enthalpie de l'air humide saturé. Mais aucun de ces brevets ne s'intéresse à la façon de minimiser l'écart de température air humide/eau au sein de chacun des étages.

A cette condition majeure, s'en ajoute une autre tout aussi importante : les coefficients d'échange thermique, résultant notamment des échanges thermiques en air sec, du mécanisme de diffusion de la vapeur d'eau dans l'air et des surfaces volumiques (S/V) des composants des unités de distillation, doivent être aussi élevés que possible, pour pouvoir suffisamment réduire cet écart de température entre l'air humide et l'eau. Mais cela est d'autant plus difficile qu'une bonne maîtrise des échanges de chaleur en air humide saturé n'est pas chose évidente.

Le premier aspect concerne différents distillateurs d'eau perfectionnés, à courants forcés d'air chaud humide saturé et récupération de chaleur latente de condensation, comportant plusieurs unités de distillation aptes à opérer dans des conditions optimales.

Le deuxième aspect concerne de tels distillateurs d'eau perfectionnés, dans lesquels par construction, ces conditions optimales, dans les chambres de condensation, sont établies par des composants à coefficient d'échange thermique très élevé.

Le troisième aspect concerne de tels distillateurs d'eau perfectionnés, dans lesquels ces conditions optimales, dans les deux chambres de chaque unité de distillation, sont établies par des écarts de température entre l'air humide et l'eau, aussi faibles que possible.

Le quatrième aspect est de réaliser de tels distillateurs d'eau perfectionnés, à capacité élevée et/ou variable de production journalière d'eau distillée, constitués par des unités de distillation modulaires, aisées à construire, à installer et à exploiter.

Le cinquième aspect concerne des procédés pour maximiser les performances de ces différents distillateurs d'eau.

Le sixième aspect est de construire de tels distillateurs d'eau perfectionnés aptes, avec des rendements énergétiques élevés, à déminéraliser de l'eau, notamment à dessaler de l'eau de mer, à concentrer des eaux industrielles et à séparer des liquides volatils de leur solvant aqueux.

Selon une définition élargie du distillateur d'eau, décrit dans le brevet français commenté ci-dessus, ce distillateur est du genre dans lequel :
- un nombre N d'unités de distillation est aménagé, l'unité de rang 1 étant la moins chaude et celle de rang N, la plus chaude ;
- chacune de ces N unités de distillation comprend un couple de chambres verticales, communiquant par le haut, assurant l'évaporation de l'eau et la condensation de la vapeur ;
- chacune de ces N chambres d'évaporation est occupée par un ensemble de composants mouillables ou hydrophiles ;
- chacune de ces N chambres de condensation est occupée par un dispositif creux d'échange thermique, ces N dispositifs étant montés en série ;
- des moyens sont raccordés à l'appareil pour lui fournir un courant d'eau, à débit massique Q_{E0}, à température initiale basse T_{E0} et à surpression appropriée, pour faire circuler ce courant d'eau de bas en haut dans les N dispositifs creux d'échange thermique ;
- une chaudière est raccordée à la sortie de ces N dispositifs creux d'échange thermique, pour porter à une température haute T_{E2}, inférieure à 100°C, le courant d'eau à température T_{E1} qui en sort ;
- des moyens sont installés dans l'appareil pour répandre cette eau chaude à température T_{E2}, en haut des composants de la chambre d'évaporation de rang N et pour la faire ruisseler le long des composants des chambres d'évaporation de rangs inférieurs ;
- des moyens sont installés dans l'appareil, pour forcer N débits ajustés d'air chaud humide saturé à circuler, de bas en haut dans les N chambres d'évaporation et de haut en bas dans les N chambres de condensation, afin de respectivement porter les N courants d'air circulant en haut des chambres d'évaporation à des températures prédéterminées T_{A1} à T_{AN} ;
- des moyens de collecte, de l'eau distillée produite, sont installés en bas de la chambre de condensation de rang 1 ;
- des moyens de collecte, de la solution aqueuse concentrée produite, sont installés en bas de la chambre d'évaporation de rang 1.

Selon l'invention, un distillateur d'eau perfectionné, du genre élargi ainsi défini, est caractérisé en ce que :
- les N dispositifs creux d'échange thermique ont des sections et des hauteurs sensiblement identiques à celles des N chambres de condensation ;
- ces N dispositifs d'échange thermique sont des groupes de plaques creuses en polymère, assemblées séparées à pas constant, chaque groupe étant doté de collecteurs amont et aval ;
- dans les N chambres de condensation, les plaques creuses sont installées verticales.

Selon l'invention, un tel distillateur d'eau est en outre caractérisé en ce qu'il comporte N plateaux perforés, aptes à répartir les débits totaux d'air, entrant respectivement dans les N chambres de condensation, en débits partiels sensiblement égaux, pénétrant dans les espaces séparant les plaques creuses de ces chambres.

Selon l'invention, un tel distillateur d'eau est plus précisément caractérisé en ce que, dans chacune des N unités de distillation :
- la communication entre les chambres d'évaporation et de condensation, comporte une fenêtre rectangulaire allongée horizontale ;
- la section de la chambre de condensation, le plateau perforé et les plaques creuses sont tous rectangulaires ;
- le plateau perforé est installé sans fuites latérales notables et il comporte des rangées de trous surmontant toutes les plaques creuses ;
- ces trous sont oblongs et percés au pas des plaques, leur largeur étant sensiblement égale à celle des espaces entre plaques.

Ces dispositions simples sont à la fois nouvelles et non évidentes, car elles apportent des solutions pratiques à des problèmes concrets non évidents, puisque ignorés et/ou non formulés jusqu'à ce jour. Tout d'abord, le choix de chambres de condensation à section rectangulaire n'est pas le seul possible mais à l'évidence le plus rationnel, dès lors que le dispositif d'échange thermique est constitué par un assemblage de plaques creuses rectangulaires, les seules actuellement disponibles sur le marché. Avec des chambres de condensation, à section non rectangulaire, l'agencement des plaques creuses, sera fait en fonction de la ou des géométries spécifiques, données à ces plaques par le constructeur.

Avec une fenêtre d'entrée rectangulaire horizontale, selon l'invention, le courant d'air chaud humide saturé, qui pénètre dans la chambre de condensation de chacune des N unités de distillation, le fait sous la forme de veines d'air parallèles horizontales uniformes, à section rectangulaire globale allongée (40 x 10 cm, par exemple). Dans ces conditions, dans l'unité de distillation de rang N, de telles veines d'air peuvent correctement s'étaler au-dessus du dispositif d'échange thermique, qui occupe toute la section de la chambre de condensation (40 x 30 cm, par exemple). Dans les autres unités, les deux débits, horizontal et vertical, qui entrent dans la chambre de condensation sont à la même température (on en verra plus loin le pourquoi et le comment) mais leur mélange présente des mouvements et des surpressions désordonnés.

Le plateau perforé, installé sans fuites latérales notables, corrige l'action potentielle de ces surpressions désordonnées, en forçant le débit total d'air, entrant dans chaque chambre de condensation, à se répartir en débits partiels sensiblement égaux, pénétrant dans les espaces séparant les plaques creuses verticales du dispositif d'échange thermique.

Avec des chambres de condensation à section rectangulaire et des plaques creuses rectangulaires, assemblées à pas constant, les perforations du plateau sont des rangées de trous oblongs, au pas de ces plaques. Dans chaque chambre de condensation de rang 1 à N, l'égalité des débits partiels d'air circulant entre plaques est le résultat de la chute notable de pression Δpₙ = ½ ρₙ vₙ², engendrée pendant leur traversée des trous (ρₙ est la densité de l'air chaud humide saturé, entrant dans la chambre de rang n, et vₙ, sa vitesse de traversée des trous). En conséquence, les surfaces, totale et individuelle, des trous oblongs du plateau perforé de chaque chambre de condensation peuvent être déterminées à la suite d'un calcul simple, fait à partir du débit total d'air entrant, lui-même calculé comme on le verra ci-après. Par ailleurs, il est possible de remplacer chaque rangée de trous par une ou plusieurs fentes de largeur appropriée calculée, mais la répartition des débits partiels d'air, circulant entre les plaques creuses, est alors moins uniforme et, dans la chambre de condensation, l'échange thermique effectué est moins efficace mais généralement satisfaisant.

Grâce aux dispositions selon l'invention, des échanges thermiques efficaces sont effectués entre, d'une part, les lames (épaisses de 3 à 6 mm) descendantes d'air chaud humide saturé, balayant les deux faces (30 x 40 cm, par exemple) de plaques creuses (épaisses de 4 à 6 mm), à parois fines (< 1 mm) en polymère, et, d'autre part, les faibles épaisseurs d'eau (2 à 4 mm) montant dans ces plaques. Cela est fait en dépit de la résistivité thermique relativement élevée des polymères. Le coefficient d'échange et la conductance thermiques, entre ces courants d'eau et d'air, sont importants car ceux-ci sont étalés sur les deux faces relativement grandes de cette pluralité de plaques creuses à parois fines, assemblées proches, occupant tout le volume d'une chambre de condensation. Il en est ainsi parce que la surface volumique, de l'échangeur thermique à plaques creuses assemblées séparées, peut atteindre S/V = 250 m²/m³, lorsque le pas des plaques est de 8 mm. Cette conductance thermique est plusieurs dizaines de fois supérieure à celle produite entre un courant d'air, traversant une chambre de condensation, occupée par un serpentin métallique usuel, en zigzag ou en hélice, et l'eau véhiculée par lui.

En outre, si l'on remplace ces serpentins usuels de 1975 par leurs successeurs sur le marché d'aujourd'hui, à savoir des faisceaux de tubes en polymère, à collecteurs amont et aval, la surface volumique d'un tel faisceau (selon leurs constructeurs, 15 < S/V < 110 m²/m³), demeure en moyenne trois fois inférieure à celle d'un groupe de plaques creuses assemblées. Le remplacement des plaques creuses par de tels faisceaux de tubes conduirait en moyenne à tripler les épaisseurs d'air et d'eau, et donc à diminuer notablement les conductances thermiques volumiques. Un autre avantage comparatif important et non évident des échangeurs thermiques à plaques creuses, installés dans les chambres de condensation d'un distillateur d'eau, est présenté plus loin, en relation avec les températures et les débits des courants d'air chaud humide saturé dans ces chambres.

A ces premiers avantages propres aux plaques creuses en polymère, s'ajoute celui fourni par le plateau perforé selon l'invention, à savoir la division du débit total d'air entrant dans chaque chambre de condensation en débits partiels sensiblement égaux circulant entre ces plaques. L'égalité de ces débits partiels d'air est nécessaire dès lors que l'on veut maximiser les performances de l'appareil. En effet, un calcul simple montre qu'un déséquilibre modéré (< 20%) entre ces débits partiels d'air a pour résultat de diviser jusque par deux l'efficacité des échanges thermiques réalisés et donc les performances de l'appareil. Et ce d'autant plus fortement que le CoP visé est plus important. En conséquence, grâce à ces premières dispositions selon l'invention, dans un distillateur d'eau ainsi perfectionné, les échanges thermiques efficaces, réalisés dans la chambre de condensation de chaque unité de distillation, y entraînent une condensation maximale de vapeur et un réchauffement maximal de l'eau.

Par ailleurs, l'expérience a montré qu'avec les trous oblongs du plateau perforé, à largeur sensiblement égale à celle de l'écart entre deux plaques creuses (> 3 mm), le risque d'obturer ces trous, par des gouttes d'eau condensée, est supprimé. En outre, chaque débit partiel d'air sortant d'un trou se répartit efficacement entre deux plaques, lorsqu'un écart de moins d'environ 10 cm sépare deux rangées de trous du plateau perforé.

Un procédé pour maximiser les performances de ces distillateurs d'eau est caractérisé en ce que, en fonction des conditions d'emploi de l'appareil, il comprend les étapes préliminaires suivantes :
- choisir une valeur appropriée pour le débit massique Q_{E0} de l'eau à traiter et une température T_{E2} comprise entre 45 et 90°C pour l'eau à répandre, en haut de la chambre d'évaporation de rang N, et relever les températures initiales basses de l'air T_{A0} et de l'eau T_{E0} ;
- choisir un appareil comportant un nombre N d'étages de distillation, avec un minimum de 3 et un maximum de 6, déterminé en fonction directe des valeurs des écarts (T_{E2} - T_{E0}) ou (T_{AN}
- T_{A0}) entre les températures extrêmes de l'eau ou de l'air, le nombre N = 4 convenant dans tous les cas ;
- choisir N températures prédéterminées optimales approchées T_{A1} à T_{AN}, à faire prendre aux courants d'air en haut des N chambres d'évaporation, pour que les flèches des N festons des courbes d'enthalpie de l'air chaud humide saturé, montant dans ces N chambres d'évaporation, aient des amplitudes réduites satisfaisantes et à peu près égales ;
- calculer les débits massiques approchés d'air sec Q_{A1} à Q_{AN} puis les N débits volumiques approchés d'air chaud humide saturé Q_{S1} à Q_{SN}, circulant dans les N chambres d'évaporation de l'appareil.

Grâce au choix de température T_{E2} < 90°C pour l'eau chaude à répandre, on minimise les entartrages des composants de l'appareil. La valeur de T_{E2}, entre 90 et 45°C, est choisie en fonction de la source de chaleur primaire disponible (solaire, moteurs thermiques, effluents chauds, brûleurs...) et, le cas échéant, de la température d'ébullition du liquide volatil (éthanol, acide, base) dissous dans l'eau, que l'on veut séparer de son solvant.

Pour mettre en œuvre les différentes dispositions de ce procédé, on utilise tout d'abord la table des enthalpies de l'air chaud humide saturé. On a vu plus haut que la flèche d'un feston, dans une chambre d'évaporation particulière, est l'écart en degrés, qui correspond à l'écart maximal en watts, entre la courbe représentant la valeur réelle du flux d'enthalpie de l'air chaud humide saturé, et celle qu'elle aurait si cette courbe était un segment de droite. Un logiciel approprié permet d'établir l'abaque numérique des amplitudes de ces N festons pour tout couple de températures extrêmes (T_{A0}, T_{AN}) retenu pour le courant d'air montant dans la colonne d'évaporation. Avec un distillateur à quatre étages de distillation, une température haute de l'eau T_{E2} = 85°C et des températures extrêmes de l'air T_{A4} = 83°C et T_{A0} = 33°C, les températures optimales approchées de l'air en haut des chambres d'évaporation de rang 1 à 3, sont sensiblement : 47,5°, 61° et 73°C. Dans ce cas, les quatre échelons ΔT_{A1} à ΔT_{A4} entre les températures extrêmes de l'air dans les chambres d'évaporation sont, de haut en bas, de 10, 12, 13,5 et 14,5°C, cependant que les flèches des festons sont sensiblement égales à 1,2°C (à quoi s'ajoute l'écart imposé de 0,5°C, dû à la salinité de l'eau). Si l'on augmente le nombre d'étages de distillation, les flèches des festons diminuent, mais en deçà d'environ 0,5°C pour ces flèches, l'augmentation du nombre N n'a guère d'intérêt. Dans un distillateur d'eau, perfectionné selon l'invention, le nombre optimal d'étages de distillation peut aller de N = 3 à N = 6, selon que l'écart entre les températures extrêmes de l'air (T_{AN} -T_{A0}), passe de 35 à 65°C. En pratique, le nombre N = 4 convient dans tous les cas, pour des raisons techniques et économiques.

Dans les quatre chambres d'évaporation, les températures T_{A1} à T_{A4} ainsi que les échelons ΔT_{A1} à ΔT_{A4} étant établis, les capacités calorifiques Cp_{A1} à Cp_{A4} de l'air chaud humide saturé, aux températures moyennes Tₘ₁ à Tₘ₄ dans ces chambres, sont connues. Les flux d'enthalpie échangés dans une chambre d'évaporation de rang n sont : ΔH_{An} = Q_{An}. Cp_{An}. ΔT_{An} et ΔH_{En} = Q_{En}. Cp_{En} ΔT_{En}. Comme les échelons ΔT_{An} et ΔT_{En} sont sensiblement égaux et Q_{En} peu différent de Q_{E0}, le débit massique approché d'air sec dans un étage de rang n est sensiblement Q_{An} = Q_{E0}. Cp_{E} / Cp_{An}. Les tables de densité de l'air chaud humide saturé permettent de connaître les débits volumiques approchés Q_{S1} à Q_{S4} de cet air chaud, aux températures moyennes Tₘ₁ à Tₘ₄, dans les quatre chambres d'évaporation. A partir de ces valeurs, il est aisé pour chaque chambre de condensation de calculer les surfaces, totale et individuelle, des trous du plateau perforé et la chute de pression qui doit être engendrée par la présence de ce plateau.

A titre d'exemple, avec Q_{E0} = 100 g/s et dans la chambre d'évaporation de rang 1, Tₘ₁ = 41°C, Cp_{A1} = 8,74 kW/kg.K, Q_{A1} = 47,8 g/s on a Q_{S1} = 43,9 dm³/s. Dans la chambre d'évaporation de rang 4, avec Tₘ₄ = 79°C et Cp_{A4} = 102,6 kW/kg.K, on a Q_{A4} = 4,1 g/s et Q_{S4} = 4,92 dm³/s. Ces deux débits volumiques si différents signifient que les écoulements de l'air, dans les chambres de condensation de rang 1 à 4, sont progressivement passés d'un régime turbulent à un régime laminaire. Cela entraîne des surfaces très différentes pour les trous des plateaux de rang 1 à 4. De plus, cela conduit à une justification supplémentaire non évidente de l'emploi exclusif d'échangeurs thermiques à plaques creuses, dans les distillateurs d'eau selon l'invention.

En effet, avec de l'air sec les coefficients d'échange thermique dépendent :
- de la vitesse de l'air (les échanges croissent avec la vitesse) ;
- d'une dimension caractéristique de l'échangeur (plus celle-ci est petite, plus les échanges sont élevés) : pour un assemblage de plaques creuses, c'est l'épaisseur du canal d'air entre deux plaques ; pour un faisceau de tubes, c'est le diamètre des tubes ; et, en général, l'épaisseur du canal est bien plus petite que le diamètre des tubes ;
- des caractéristiques physiques de l'air (viscosité et conductivité thermique) qui dépendent un peu de la température.

Dans le cas des plaques creuses, en dessous d'une certaine vitesse de l'air, l'écoulement change de régime (de turbulent il devient laminaire) et le coefficient d'échange ne dépend plus de la vitesse mais reste relativement élevé, car la dimension caractéristique est petite. Il n'en est pas de même dans le cas des faisceaux de tubes, où la transition de régime d'écoulement est moins nette et la dimension caractéristique plus importante que pour des plaques.

Avec de l'air humide saturé, en régime d'évaporation ou de condensation, le coefficient d'échange thermique apparent dépend du coefficient d'échange en air sec défini plus haut, mais, de plus, le mécanisme de diffusion qui intervient dans le processus d'évaporation ou de condensation amplifie très fortement ce coefficient d'échange et le coefficient d'amplification est sensiblement proportionnel à la vitesse d'augmentation de la pression de vapeur saturante en fonction de la température. En conséquence dans la chambre de condensation la plus chaude du distillateur (rang N), où le débit équivalent d'air sec (et donc sa vitesse) est faible, un échangeur thermique à plaques creuses aura de bien meilleures performances qu'avec un faisceau de tubes ; et cela est d'autant plus vrai que sa surface volumique S/V est grande. Il en sera plus ou moins de même pour les chambres de condensation moins chaudes du distillateur.

Selon l'invention, un tel distillateur d'eau, du genre dans lequel :
- les N unités de distillation sont superposées, formant deux colonnes d'évaporation et de condensation ;
- et un ventilateur est installé en bas de la colonne d'évaporation ;
est caractérisé en ce que :
- les N chambres d'évaporation comportent des supports plans minces, à faces mouillables ou hydrophiles, installés verticaux, à pas constant ;
- les N communications, entre les couples de chambres, sont N rangées horizontales de fentes verticales, au même pas que le précédent, pratiquées dans une cloison séparant les deux chambres ;
- la commande du ventilateur est préréglée et les sections de passage respectives des rangées de fentes sont fixes ;
- cette commande du ventilateur et ces sections de fentes ont été établies en accord avec les spécifications de construction découlant des réglages manuels finaux du premier appareil d'une série d'appareils identiques.

Selon une alternative, un distillateur d'eau, du genre dans lequel :
- les N unités de distillation sont superposées, formant deux colonnes d'évaporation et de condensation ;
- les N chambres d'évaporation sont garnies de noix artificielles mouillables, entassées en vrac ;
- un ventilateur est installé en bas de la colonne d'évaporation ;
est caractérisé en ce que :
- les N communications, entre les couples de chambres, sont des conduits, à section rectangulaire allongée, comportant en amont une zone perforée horizontale, apte à bloquer lesdites noix et à laisser passer l'air, et en aval, ladite fenêtre rectangulaire allongée horizontale ;
- dans chacun des N conduits, en aval immédiat de la zone perforée, est installé un dévésiculeur, suivi d'une cloison comportant une fente rectangulaire horizontale ;
- la commande du ventilateur est préréglée et les largeurs respectives de ces N fentes horizontales sont fixes ;
- cette commande du ventilateur et ces largeurs de fentes ont été établies en accord avec les spécifications de construction découlant des réglages manuels finaux du premier appareil d'une série d'appareils identiques.

Un procédé pour maximiser les performances, du premier exemplaire d'une série de l'un ou l'autre de ces deux distillateurs, comprend les étapes complémentaires suivantes :
- ajuster la vitesse du ventilateur pour faire circuler en boucle ouverte ou fermée, dans l'étage de distillation de rang 1, le débit volumique d'air chaud humide saturé Q_{S1} précédemment calculé, afin de porter la température de ce courant d'air, en haut de la chambre d'évaporation de cet étage, à la valeur optimale approchée prédéterminée T_{A1} ;
- ajuster successivement les sections de passage réglables des communications, établies entre les chambres d'évaporation et de condensation de rangs 1 à (N-1), pour respectivement porter les températures des courants d'air en haut des chambres d'évaporation des étages de distillation de rangs 2 à N, aux valeurs optimales approchées prédéterminées T_{A2} à T_{AN} ;
- maximiser la température T_{E1} de l'eau sortant de la colonne de condensation, pour déterminer les spécifications de construction de ce ventilateur et de ces (N-1) sections de passage, (a) en rendant respectivement égales les températures T_{A1} à T_{A(N-1)} des courants d'air chaud humide saturé, entrant dans les chambres d'évaporation des étages de distillation de rangs 2 à N, et les températures T_{A1*} à T_{A(N-1)*} des courants d'air chaud humide saturé, sortant des chambres de condensation de ces étages de distillation, par une légère correction des (N-1) sections de passage précédemment ajustées; et (b) en réajustant le débit d'air précédemment produit par le ventilateur, notamment par une légère correction de la fréquence de la tension d'alimentation de son moteur, lorsque celui-ci est de type synchrone.

La mise en oeuvre du procédé peut débuter dès lors que le nombre N d'étages de distillation et les N températures T_{A1} à T_{AN} ont été choisis, que l'eau chaude est répandue depuis un certain temps (t > 1 h, du fait de l'inertie thermique de l'appareil), que le ventilateur fait circuler de l'air, en boucle ouverte ou fermée, et que les ouvertures de cloison sont mi-closes. On met fin à ce premier réglage dès que la température T_{A1} prévue est observée. Le débit massique d'air sec Q_{A1}, inclus dans le débit d'air fourni par le ventilateur, est alors, comme T_{A1}, à une valeur optimale approchée. Lorsque la circulation de l'air est faite en boucle fermée, la température T_{E0} de l'eau froide et l'état initial des sections de passage des ouvertures de cloison déterminent la température basse initiale T_{A0} de l'air. Dans ce cas, T_{A1} est une température prédéterminée provisoire, obtenue à la fin de cette première étape de réglage des débits des courants d'air circulant dans les chambres d'évaporation.

La deuxième étape du procédé fait usage des moyens de réglage des sections de passage de l'air. On commence par l'ouverture la plus basse, afin d'ajuster la température T_{A2} du courant d'air, en haut de la chambre d'évaporation de rang 2. Ce réglage effectué, on fait de même pour les chambres d'évaporation de rangs croissants de 3 à N. On recommence l'opération au moins une seconde fois pour corriger les variations des températures T_{A1} à T_{AN} inévitablement entraînées par les réglages successifs, puisque les débits massiques d'air sec Q_{A1} à Q_{AN} et leurs températures T_{A1} à T_{AN} sont interdépendants. Dans le cas d'une circulation d'air en boucle fermée, la température basse T_{A0} de l'air, insufflé en bas de la colonne d'évaporation, se rapproche progressivement de T_{E0}, la température initiale de l'eau.

La troisième étape du procédé a pour objet de respectivement amener à des valeurs égales, les températures T_{A1} à T_{A(N-1)} et T_{A1*} à T_{A(N-1)*}, des tranches d'air circulant en bas des chambres d'évaporation et de condensation des (N-1) étages de distillation superposés les plus hauts. Lorsque la température de l'air, en bas d'une chambre de condensation de rang donné, est différente de celle en bas de la chambre d'évaporation de même rang, on ignore si le débit massique d'air sec concerné, Q_{A1} à Q_{AN}, y est un peu trop important ou trop faible. En pratique, on commence par l'étage le plus haut et on augmente ou diminue le débit d'air circulant dans la chambre d'évaporation de rang N, en augmentant ou en diminuant légèrement et avec précaution la section de passage de la communication entre les chambres concernées. On attend un moment pour voir si cette action se traduit par un rapprochement des deux températures en question. Si oui, on continue jusqu'à ce qu'elles soient égales. Sinon, on fait l'inverse. Si cela n'est pas suffisant pour obtenir l'égalité recherchée, on retient le réglage le meilleur et on le complète en ajustant la section de passage de la communication délimitant le haut de l'étage de distillation de rang (N-1) jusqu'à ce que cette égalité de températures soit observée. On procède ensuite de la même façon pour cet étage de distillation de rang (N-1) en ajustant la section de passage de l'ouverture délimitant l'étage de rang (N-2) et en revenant sur les deux ouvertures de rangs supérieurs, pour maintenir l'égalité des températures en bas des chambres d'évaporation et de condensation des étages de distillation des rangs (N-1) et N. La procédure est renouvelée pour tous les étages de rangs inférieurs, jusqu'à l'étage de rang 2. Ensuite, il est a priori nécessaire d'ajuster le débit d'air produit par le ventilateur pour maximiser T_{E1}, la température de l'eau en sortie de la colonne de condensation.

Avec une circulation d'air en boucle fermée, on aura finalement minimisé au mieux la température de l'air T_{A0*} en bas de la colonne de condensation en la rapprochant de T_{E0}, celle de l'eau y entrant et, en même temps, on aura maximisé au mieux les températures T_{AN} de l'air et T_{E1} de l'eau en haut de cette colonne, en les rapprochant toutes deux de celle de l'eau répandue T_{E2}. Les températures de l'air, en bas et en haut des étages de distillation, ont alors des valeurs optimales de consigne T_{A0C} à T_{ANC}, légèrement différentes des valeurs optimales théoriques initiales T_{A1} à T_{AN}, qui correspondent aux valeurs retenues pour les trois termes Q_{E0}, T_{E2} et T_{E0} d'un distillateur particulier. Dans les N étages, la représentation f(T) des flux d'enthalpies des débits massiques d'eau, comprend deux droites parallèles, de pente Cp_{E}, écartées d'un nombre de degrés (T_{E2} - T_{E1}), et la représentation f(T) des flux d'enthalpies de l'air comprend, entre ces deux droites, une seule ligne formée par des festons, à extrémités successives T_{A0C} à T_{ANC}, la pente moyenne de cette ligne étant un peu supérieure à celle de ces deux droites. Les relations entre les températures extrêmes d'eau et d'air sont : (T_{E1} - T_{E0}) = (T_{E2} - T_{E3}) < (T_{ANC} - T_{A0C}).

Pour finir, on notera que, du fait des fortes inerties thermiques des différents composants de l'appareil, l'ensemble des opérations de mise en oeuvre du procédé pour maximiser les performances du premier distillateur d'eau d'une série peut durer quelques heures, ce nombre d'heures étant lui-même directement proportionnel au nombre N d'étages.

Dans ces conditions, en mettant en oeuvre le procédé l'expérience a montré qu'avec un distillateur d'eau à quatre étages de distillation, construit selon l'invention, un CoP > 6 peut être obtenu, pour un débit quotidien d'eau distillée produit, égal à 3 à 5 fois le volume total des chambres d'évaporation et de condensation de l'appareil.

Selon l'invention, le premier modèle d'un second type de distillateur d'eau perfectionné, ayant l'architecture générale du nouveau distillateur d'eau défini plus haut et N unités de distillation superposées, constituant une colonne d'évaporation et une autre de condensation ;
est caractérisé en ce que
- ces N étages de distillation sont séparés les uns des autres par (N-1) cloisons horizontales ;
- deux communications, l'une en haut et l'autre en bas, sont établies entre les chambres verticales d'évaporation et de condensation de chaque étage de distillation ;
- N ventilateurs à débits ajustables, notamment au moyen de moteurs synchrones, externes aux chambres de condensation, ont leurs hélices installées dans les communications basses des N étages de distillation, pour produire N courants d'air indépendants circulant respectivement dans ces N étages ;
- les ensembles de composants creux des chambres de condensation de ces N étages de distillation sont raccordés entre eux par des tubes traversant ces (N-1) cloisons horizontales ;
- en haut et en bas des composants hydrophiles ou mouillables des chambres d'évaporation de ces N étages de distillation, sont respectivement installés des moyens d'épandage et de collecte de l'eau circulant dans la colonne d'évaporation, les moyens d'épandage des chambres d'évaporation de rangs (N-1) à 1 étant respectivement alimentés par les moyens de collecte des chambres de rangs N à 2.

Selon l'invention, le second modèle de ce second type de distillateur d'eau perfectionné, ayant l'architecture générale du nouveau distillateur d'eau défini plus haut, est caractérisé en ce que :
- les N unités de distillation sont juxtaposées ;
- deux communications, l'une en haut et l'autre en bas, sont établies entre les chambres verticales d'évaporation et de condensation de chaque unité de distillation ;
- N ventilateurs à débits ajustables, notamment au moyen de moteurs synchrones, externes aux chambres de condensation, ont leurs hélices installées dans les communications basses des N unités de distillation, pour produire N courants d'air indépendants circulant respectivement dans ces N unités ;
- les N dispositifs creux d'échange thermique de ces N chambres de condensation, sont raccordés entre eux par (N-1) conduits calorifugés ;
- les N ensembles de composants hydrophiles ou mouillables, des N chambres d'évaporation, comportent en haut et en bas de leurs extrémités respectives des moyens d'épandage et des moyens de collecte d'eau à distiller ;
- (N-1) pompes et (N-1) conduits calorifugés sont installés entre les N chambres d'évaporation, pour amener l'eau recueillie, par les moyens de collecte des unités de distillation de rangs N à 2, à se déverser dans les moyens d'épandage des unités de rangs (N-1) à 1.

Un procédé pour maximiser les performances, du premier appareil d'une série de l'un ou l'autre des deux distillateurs d'eau perfectionnés de ce second type, est caractérisé en ce qu'il comprend les étapes complémentaires suivantes :
- ajuster successivement les N débits d'air respectivement produits par les N ventilateurs, pour engendrer en haut des N unités de distillation des températures optimales approchées prédéterminées T_{A1} à T_{AN}, correspondant aux valeurs choisies Q_{E0} et T_{E2} ;
- ensuite, corriger légèrement ces N débits pour maximiser T_{E1}, la température de l'eau sortant du dispositif d'échange thermique de rang N, et afficher des températures optimales de consigne T_{A1C} à T_{ANC};
- relever les réglages finaux des commandes des N ventilateurs pour notamment en faire les spécifications des appareils de la série.

Grâce à ces dernières dispositions, on peut construire deux nouveaux distillateurs d'eau particulièrement intéressants, adaptés à traiter des eaux à paramètres d'entrée fixes : débit massique Q_{E0} et température haute T_{E2}. En effet, les N unités de distillation sont sensiblement identiques, à ceci près cependant que les rangées de trous des plateaux sont différentes d'une unité à l'autre et que les commandes des N ventilateurs sont réglées différemment. Un tel distillateur d'eau, à unités de distillation juxtaposées, présente un grand intérêt lorsque la production journalière d'eau distillée est importante (>10 m³/jour). En effet, il permet de construire des unités de distillation identiques, de hauteur moyenne, plus faciles à manutentionner que des tours à étages ayant le même nombre d'unités de distillation.

Dans le cas où les deux paramètres Q_{E0} et T_{E2} sont variables (énergie solaire), une situation intéressante se présente également. En effet, comme on l'a vu plus haut, pour tout groupe de paramètres d'entrée Q_{E0}, T_{E2}, T_{E0} et T_{A0}, dès lors que sont fixées les températures T_{A1} à T_{AN}, il est aisé de calculer Q_{A1} à Q_{AN} ainsi que Q_{S1} à Q_{SN} et donc les conditions de fonctionnement des ventilateurs. Avec des ventilateurs à moteurs synchrones, on détermine ainsi les fréquences F₁ à F_{N} de leurs tensions d'alimentation. Cette mise en oeuvre du procédé, pour maximiser les performances d'un distillateur d'eau à N unités juxtaposées, est particulièrement aisée, au moyen d'un calculateur, établissant les correspondances entre les fréquences F₁ à F_{N} et les températures de consigne T_{A1C} à T_{ANC} à obtenir, dès lors que les quatre valeurs Q_{E0}, T_{E2}, T_{E0} et T_{A0} y sont entrées. Pour ce faire, on constitue une banque de données expérimentales, en procédant à au moins trois opérations de réglage optimal, pour chacun des quatre paramètres d'entrée Q_{E0}, T_{E2}, T_{E0} et T_{A0}. Ensuite, on élabore un logiciel reliant ces données aux N températures optimales de consigne T_{A1C} à T_{ANC} et aux N fréquences F₁ à F_{N} des tensions d'alimentation des moteurs. Ces fréquences seront établies par un calculateur, à partir des valeurs choisies pour Q_{E0}, T_{E2}, T_{E0} et T_{A0}, puis réglées manuellement ou automatiquement.

Pour pouvoir correctement dimensionner les chambres d'évaporation et de condensation des N unités de distillation des différents types de distillateurs d'eau présentés ci-dessus, en fonction du débit d'eau distillée souhaité pour l'appareil à construire, il est nécessaire de déterminer leurs conductances thermiques CT (watts par degré) et/ou à leurs résistances thermiques RT (degrés par watt). Pour ce faire, on les calcule. Cela se fait en fonction des architectures et des composants respectifs, envisagés pour la construction des deux colonnes du distillateur. On calcule alors la conductance thermique d'une tranche élémentaire de chambre d'évaporation ou de condensation. Puis on intègre ces résultats sur la hauteur de chacune des deux chambres de chacun des N étages de distillation, pour finalement constituer les abaques des conductances et résistances thermiques des deux colonnes. La précision de ces calculs est estimée à 10%. Les structures des deux colonnes ayant été choisies, l'étape suivante consiste à respectivement donner des résistances thermiques appropriées aux deux chambres des N étages de distillation. Cela est fait en accord avec les flux égaux d'enthalpies ΔH_{E} et ΔH_{A} à échanger dans les deux chambres d'un même étage de distillation. D'un étage à l'autre, ces flux sont égaux ou non. Il en est de même pour les résistances thermiques des deux chambres d'une unité de distillation, en fonction de considérations pratiques imposées par la géométrie des appareils.

Les caractéristiques et avantages de l'invention apparaîtront d'une manière plus précise à la suite de la description ci-après, faite en référence aux dessins annexés dans lesquels :
- la figure 1 représente le schéma d'un distillateur d'eau, à quatre étages de distillation, notamment pour dessaler de l'eau de mer ;
- la figure 2 représente le schéma d'un distillateur d'eau du même genre, pour concentrer de l'eau industrielle polluée;
- la figure 3 représente les moyens de réglage de la section efficace d'une ouverture de cloison ;
- la figure 4 représente les courbes des enthalpies de l'eau et de l'air circulant dans un distillateur d'eau selon l'invention ;
- la figure 5 représente un plateau de répartition de l'air dans les chambres de condensation ;
- la figure 6 représente le schéma d'un distillateur d'eau, à quatre unités de distillation juxtaposées, selon l'invention.

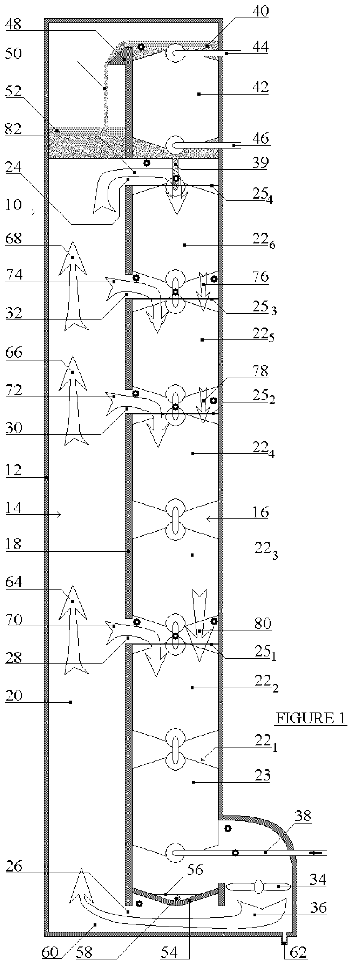

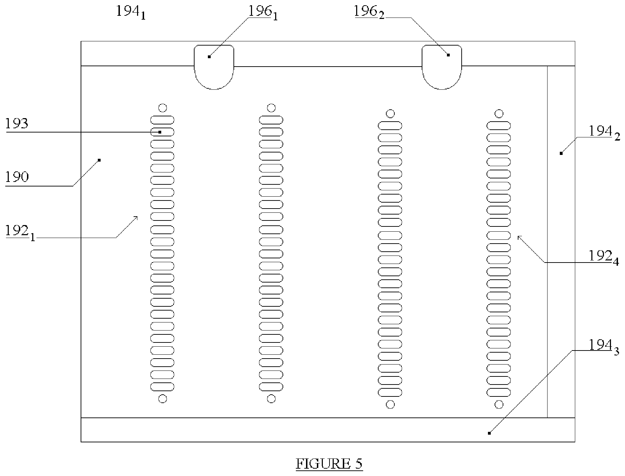

La figure 1 représente schématiquement le premier appareil d'une série de distillateurs d'eau de mer, selon l'invention. C'est une tour 10, à parois isolantes 12, haute de 280 cm, qui comprend deux colonnes, l'une d'évaporation 14 et l'autre de condensation 16, séparées par une cloison 18 en polymère. L'ensemble des composants de la colonne d'évaporation 14 est constitué par une juxtaposition au pas de 15 mm de quarante plaques 20, en polymère, épaisses de 2 mm, hautes de 240 cm et larges de 20 cm. La surface totale d'évaporation de la colonne 14 est de 38,4 m² et son volume est de 0,29 m³. Les plaques 20 sont revêtues d'un flocage hydrophile, épais de 0,5 mm, et elles sont juxtaposées verticales, l'écart entre plaques étant de 12 mm. La colonne de condensation 16 mesure 240 cm de haut et elle comporte, montés en série par des tubes de 5 cm, six échangeurs thermiques 22₁₋₆, hauts de 35 cm et larges de 20, formés par une juxtaposition à pas constant (10 mm), de quarante plaques creuses rectangulaires 23, installées verticales. Ces plaques creuses 23 sont extrudées soufflées et elles ont des parois gaufrées minces (< 1 mm) en polymère et une épaisseur interne de 3 mm, l'écart entre plaques étant de 5 mm. Les têtes de raccordement de ces plaques creuses assemblées sont soudées pour former les collecteurs amont et aval de l'échangeur thermique ainsi formé. Ces plaques creuses et ces échangeurs sont décrits dans la demande de brevet international publiée WO 2011/145065 A1, déposée par le demandeur. Au-dessus de chaque échangeur est installé un plateau à rangées de trous 25₁₋₄, apte à égaliser les débits partiels d'air circulant entre les plaques creuses. Une forme de réalisation particulière d'un tel plateau est représentée à la figure 5. La surface totale de condensation de la colonne 16 est de 29 m² et le volume total des chambres est de 0,19 m³.

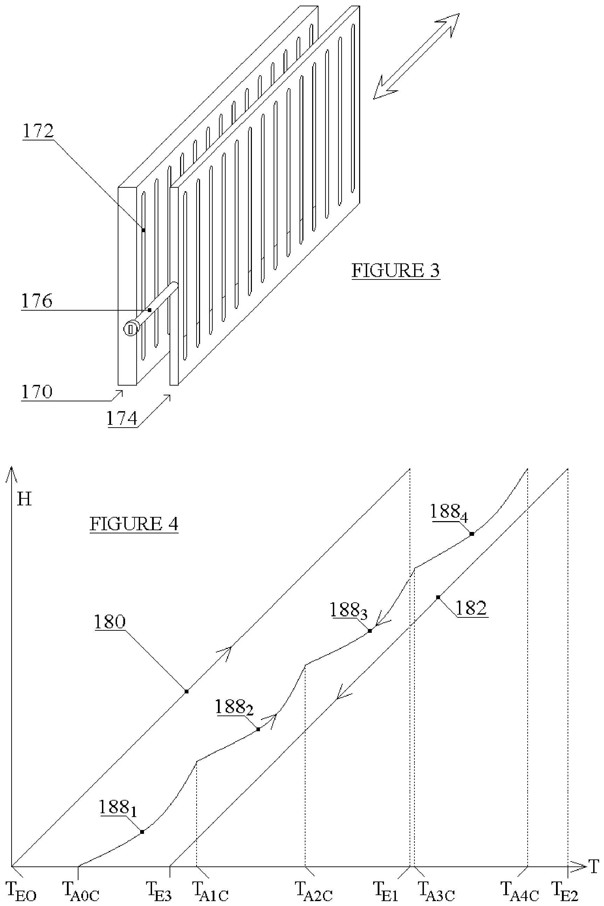

La cloison 18 a 240 cm de haut et elle comporte deux larges ouvertures : l'une 24 à son sommet et l'autre 26, à sa base. Cette cloison 18 comporte en outre trois ouvertures intermédiaires identiques, 28, 30 et 32, et chacune de ces ouvertures est une rangée horizontale de fentes verticales, hautes de 10 cm et larges de 2 mm, ayant le même pas (15 mm) que les plaques 20 de la colonne d'évaporation 14. Une telle rangée de fentes est représentée à la figure 3. Ces trois rangées de fentes ont des sections efficaces ajustables, grâce à des caches également décrits à la figure 3. Le bas de l'ouverture 32 est situé à 2 m du plancher de la colonne, et les bas des ouvertures 30 et 28, à 1.6m et 0,8 m, Les hauteurs des quatre étages de distillation de la tour 10 s'en déduisent. Les deux étages du haut de la tour 10 comportent chacun un échangeur thermique 22₆, 22₅ et les deux du bas, chacun deux échangeurs 22₄-22₃ et 22₂-22₁. Des conduits en polymère, qui relient les collecteurs de ces échangeurs 22₁₋₆; font face aux trois ouvertures 28, 30,32 de la cloison 18. Les résistances thermiques respectives des chambres d'évaporation et de condensation des quatre étages de distillation, ainsi aménagés dans la tour 10, ont été calculées comme indiqué plus haut.

L'ouverture 26, aménagée en bas de la cloison 18, est équipée d'un ventilateur 34 pour aspirer l'air du bas de la colonne de condensation 16 et le propulser de bas en haut de la colonne d'évaporation 14 (flèche 36). Le moteur électrique de ce ventilateur 34 est, par exemple, du type synchrone et alimenté par une tension à fréquence variable. L'abaque donnant le débit et la surpression maximale de l'air fourni par ce ventilateur 34, en fonction de la fréquence d'alimentation, est disponible. Le collecteur amont de l'échangeur thermique 22₁ de la colonne de condensation 16 est connecté par un conduit en polymère 38 à un réservoir lui fournissant l'eau de mer à distiller, à débit massique Q_{E0} approprié. Cette eau de mer constitue la source froide de l'appareil. Le collecteur aval de l'échangeur thermique 22₆ de la colonne de condensation 16 est raccordé, par un conduit en polymère 39, à l'entrée d'une chaudière 40, équipée de moyens de chauffage, constitués par un échangeur thermique 42, semblable aux échangeurs 22₁₋₆. Cet échangeur 42 est alimenté par deux tuyaux amont et aval 44-46, dans lesquels circule un fluide caloporteur, fourni par une source chaude primaire externe (non représentée). La chaudière 40 dispose d'un déversoir 48, duquel coule un filet 50 d'eau de mer chaude, qui aboutit dans une bassine 52. Cette bassine 52 est dotée d'un fond percé de quarante paires de trous à collier, correspondant à quarante gouttières d'épandage (non représentées) coiffant les sommets des quarante plaques 20 de la colonne d'évaporation 14. A la base de la colonne de condensation 16, est installé un bac 54 pour collecter l'eau distillée 56 ; ce bac 54 est doté de parois en forme de V très ouvert et d'un conduit d'évacuation 58. La colonne d'évaporation 12 et la tour 10 comportent, à leur base commune, un bac 60 pour recueillir l'eau de mer concentrée, ce bac 60 étant doté d'un conduit d'évacuation 62. Les flèches 64-66-68 représentent les courants d'air montant dans la colonne d'évaporation et les flèches 70-72-74, les courants d'air dérivés à travers les ouvertures 28-30-32 de la cloison 18. Les flèches 76-78-80 représentent les courants d'air descendant dans la colonne de condensation 16 et la flèche 82, le courant entrant dans cette colonne 16, par l'ouverture 24 aménagée au sommet de la cloison 18.

Dans ce premier appareil 10 d'une série de distillateurs identiques, plusieurs thermocouples mesurant les températures T_{A1} à T_{A4} et T_{A1*} à T_{A4*} définies plus haut, sont installés à des emplacements remarquables de ce distillateur ; ils sont représentés par des points noirs à centre blanc et sont reliés à un circuit de conversion numérique et d'affichage, non représenté. Deux thermocouples, respectivement installés dans des inserts métalliques creux, engagés étanches dans des trous pratiqués à travers la paroi des conduits d'entrée 38 et de sortie 39 de la colonne de condensation 16 mesurent T_{E0} et T_{E1} et un troisième thermocouple placé dans la chaudière 40 mesure T_{E2}. Cinq thermocouples, respectivement situés en face des ouvertures haute 24, basse 26, et intermédiaires 28, 30, 32 de la cloison 18, mesurent T_{A0} à T_{A4}. Trois autres thermocouples, respectivement situés en bas des échangeurs thermiques 22₃, 22₅, 22₆ et au voisinage de la paroi externe de la colonne de condensation 16, mesurent T_{A1*}, T_{A2}. et T_{A3*}. Trois thermocouples, respectivement engagés dans des inserts en métal traversant la paroi des conduits reliant les échangeurs thermiques 22₂-22₃, 22₄-22₅ et 22₅-22₆, mesurent, au niveau des ouvertures intermédiaires 28, 30, 32, les températures de l'eau montant dans la colonne de condensation.

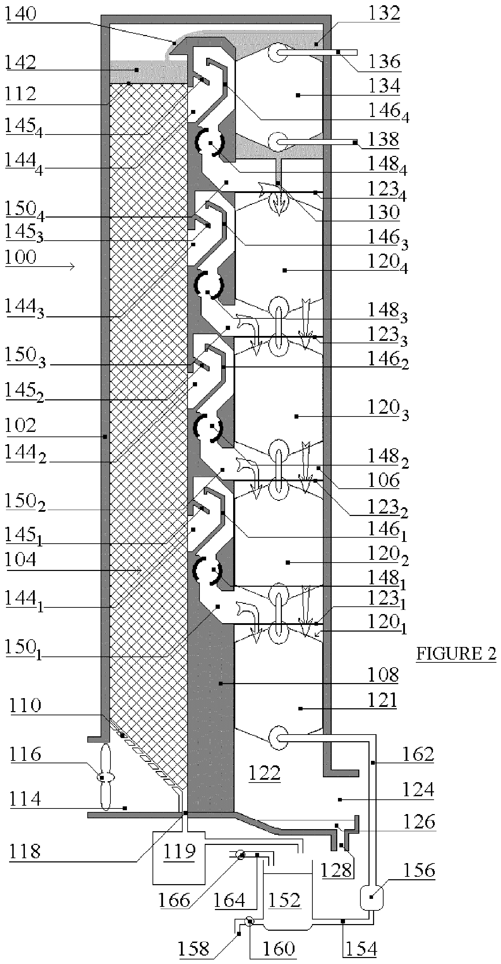

La figure 2 est une représentation simplifiée, partiellement schématique, du premier appareil 100 d'une série de distillateurs d'eau identiques, à quatre étages, selon l'invention, adapté à concentrer des eaux industrielles (effluents pollués ou solutions aqueuses agroalimentaires). Pour produire un liquide hautement concentré, ce distillateur opère avec de l'eau circulant en circuit fermé et de l'air circulant en circuit ouvert. L'air ambiant constitue la source froide de l'appareil. Selon cette figure 2, le distillateur d'eau 100 est enfermé dans une armoire haute de 240 cm, large de 100 cm, profonde de 50 cm et dotée d'une paroi externe isolante 102, en polymère expansé, épaisse de 10 cm. Ce distillateur 100 comporte deux colonnes, l'une d'évaporation 104 et l'autre de condensation 106, séparées par une cloison 108, épaisse de 15 cm et haute de 220 cm. La colonne d'évaporation 104 a une section carrée de 25 cm de côté et elle comporte un fond oblique 110, perforé d'ouvertures de 1 cm de diamètre, disposées en quinconce, avec des écarts de 2 cm, une bande basse, large de 3 cm, n'étant pas perforée. La face externe du fond 110 est lisse et sa face interne, dotée d'un collier, haut de 5 mm, autour de chaque ouverture. Sur ce fond 110, des noix artificielles mouillables sont entassées en vrac, jusqu'à un niveau 112, proche du sommet de la cloison 108. Ces noix peuvent être des selles NOVALOX® en céramique ou en plastique, longues de 12 mm. Sous le fond oblique perforé 110, est aménagée une chambre 114, comportant une ouverture circulaire occupée par un ventilateur 116, à débit d'air ajustable, capable de produire une surpression de plusieurs centaines de Pascals. Dans la bande basse non perforée du fond oblique 110, débouche la partie verticale d'un conduit 118 d'évacuation de la solution aqueuse concentrée.

La colonne de condensation 106 comprend quatre échangeurs thermiques 120₁₋₄, à plaques creuses rectangulaires 121 et collecteurs amont-aval, semblables aux échangeurs 22₁₋₆ de la figure 1. Ces échangeurs 120₁₋₄ sont montés en série, avec des intervalles de 5 cm entre leurs collecteurs et au-dessus de chaque échangeur est installé un plateau à rangées de trous 123₁₋₄, semblable au plateau 25₁₋₄ de la fig.1 et au plateau 190 de la figure 5. Sous l'échangeur thermique 120₁, est aménagée une chambre 122, pourvue d'une fenêtre 124, débouchant sur l'extérieur, et d'un fond concave 126, doté d'un conduit d'évacuation 128. Le collecteur aval de l'échangeur thermique 120₄, est raccordé, par un conduit 130, à l'entrée d'une chaudière 132, constamment remplie d'eau polluée. Dans cette chaudière 132, est monté fixe un échangeur thermique 134, identique aux échangeurs 120₁₋₄. Cet échangeur 134 est pourvu d'un tuyau amont 136 et d'un tuyau aval 138, reliés à la sortie et à l'entrée d'une source chaude externe, qui fournit à cet échangeur 134 un fluide chaud à température et à débit appropriés. La chaudière 132 est pourvue d'un déversoir 140, par lequel l'eau chaude coule dans une bassine d'épandage 142, reposant sur le sommet 112 de l'entassement des noix artificielles mouillables garnissant la colonne d'évaporation 104. Le fond de la bassine 142 est percé de nombreux trous à colliers de débordement, disposés en quinconce, ces trous ayant 3 mm de diamètre et 2 cm d'écart.

La cloison 108 est en polymère expansé. La partie la plus basse de cette cloison 108 est sans aménagement et toute son autre partie est occupée par quatre chambres de transit indépendantes 144₁₋₄, dotées d'entrées rectangulaires allongées, formées par des rangées de fentes verticales, représentées à la figure 3. Ces fentes ont une largeur inférieure à toute dimension des noix de garnissage de la colonne d'évaporation 104. La hauteur du bord inférieur de la rangée de fentes à l'amont de la chambre de transit 144₁ est de 65 cm et celles des bords inférieurs des autres rangées de fentes 144₂₋₄, de respectivement 105, 145 et 185 cm. Ces hauteurs sont celles des plafonds des chambres d'évaporation superposées de la colonne 104 du distillateur 100.

Comme les courants d'air, dérivés par les entrées des chambres de transit 144₁₋₄, emportent généralement des gouttes d'eau industrielle, plus ou moins concentrée, ces entrées comportent des dévésiculeurs, constitués par des chicanes 145₁₋₄ et des déflecteurs 146₁₋₄, en forme de crochet, coopérant pour bloquer ces gouttes d'eau et les ramener dans la colonne d'évaporation 104. Au-delà de ces déflecteurs, des conduits sont aménagés qui débouchent sur des vannes à boisseaux cylindriques 148₁₋₄, puis sur les intervalles 150₁₋₄, qui séparent échangeurs thermiques 120₁₋₄ et chaudière 132. Dans les vannes 148₁₋₄, les cylindres tournants, à ouvertures longitudinales diamétralement opposées, (en noir sur le dessin) sont dotés de moyens de commande manuelle non représentés. La vanne 148₄ est ouverte au maximum et la perte de charge, apportée par la chambre 144₄, est négligeable.

Le conduit 118 d'évacuation de l'eau polluée concentrée, produite par le distillateur 100, est relié à un dispositif 119 de refroidissement naturel de l'eau, débouchant au-dessus d'un réservoir 152. Ce réservoir 152 possède deux conduits de sortie, l'un 154, relié à l'entrée d'une pompe 156, et l'autre 158, pourvu d'une électrovanne 160, pour évacuer cette eau industrielle concentrée vers une citerne de stockage. Pour fermer la boucle de circulation de l'eau dans le distillateur 100, un tuyau 162 relie la sortie de la pompe 156, au collecteur amont de l'échangeur thermique 120₁ de la colonne de condensation 106. L'unité industrielle, produisant l'eau polluée à concentrer, est raccordée au distillateur 100 par un conduit 164 débouchant au-dessus du réservoir 152, ce conduit étant pourvu d'une électrovanne 166. Comme pour le distillateur 10 de la figure 1, des thermocouples non représentés sont installés aux différents points de ce distillateur 100 afin de mesurer les températures remarquables de l'air et de l'eau qui y circulent.

Lorsque dans un distillateur 100, selon la figure 2, l'eau industrielle circule en circuit fermé et l'air, en circuit ouvert ou fermé, pour effectuer une concentration des matières dissoutes dans cette eau, il est nécessaire de faire appel à un dispositif 119 de refroidissement, de préférence naturel, pour abaisser au maximum la température initiale T_{E3} du concentré, à déverser dans le réservoir 152 et à en faire une ou la source froide de l'appareil. Si ce refroidissement n'est pas suffisant pour amener ce concentré à une température T_{E0} inférieure à la température T_{A0} du courant d'air entrant dans la colonne d'évaporation ou de T_{A0*} du courant d'air sortant de la colonne de condensation, le CoP du distillateur en est directement affecté. Plus le liquide concentré recyclé sera refroidi, moins la dégradation du CoP sera importante. Un refroidissement naturel maximal de ce concentré tiède peut être obtenu, lorsqu'il est déversé au sommet d'un ensemble de supports verticaux, à faces hydrophiles ou mouillables, puis refroidi au cours de sa descente, par convection naturelle ou forcée de l'air ambiant. Lorsque le point de rosée de cet air ambiant est suffisamment bas, la température finale T_{E0} du liquide concentré à recycler est, comme sur la figure 4, inférieure à T_{A0} la température initiale basse de l'air injecté au pied de la colonne d'évaporation.

La figure 3 représente une partie d'une rangée horizontale 170 de fentes verticales 172, aménagée dans la cloison 18 du distillateur 10 de la figure 1 et à l'entrée d'une chambre de transit 144₁₋₄ de la cloison 108 du distillateur 100 de la figure 2. Cette figure 3 représente également le cache coulissant 174, disposé devant chaque rangée de fentes de la cloison 18 du distillateur 10. Ces fentes 172 ont 10 cm de haut, 2 mm de large et un pas de 15 mm. Le cache 174 comporte une rangée de fentes de largeur identique à celle des fentes de la rangée 170 et, de préférence, une hauteur décroissante avec le rang de l'étage de distillation concerné. Ce cache 174 est solidaire d'une tige filetée 176, montée tournante dans un écrou fixe, non représenté.

La figure 4 représente les courbes H_{E} = f(T) des flux d'enthalpie de l'eau, circulant en circuit ouvert, et celles H_{A} = f(T) de l'air, circulant en circuit fermé, dans un distillateur 10 dans lequel tous les réglages ont été correctement effectués. Les droites 180 et 182 représentent respectivement les flux d'enthalpie, croissant et décroissant, des courants d'eau froide montante et d'eau chaude descendante. Ces droites sont parallèles et leur pente est Cp_{E}. Les températures aux extrémités de ces deux droites 180-182 sont respectivement T_{E0}, T_{E1} et T_{E2}, T_{E3}. La courbe 184 représente à la fois les flux d'enthalpie des courants, montant et descendant, de l'air chaud humide saturé circulant dans le distillateur 10. La courbe 184 comporte quatre festons 188₁₋₄ correspondant aux quatre étages de distillation de l'appareil 10. Les températures aux extrémités de ces festons 188₁₋₄ sont respectivement T_{A0C}, T_{A1C}, T_{A2C}, T_{A3C} et T_{A4C}. Entre les tranches successives des festons 188₁₋₄ et des deux droites, 180 montante et 182 descendante, les écarts horizontaux, sont représentatifs des résistances thermiques apparentes différentes des tranches correspondantes des colonnes d'évaporation 14 et de condensation 16 du distillateur.

La figure 5 représente un plateau 190, en polymère, surmontant l'une des chambres de condensation d'un distillateur d'eau, selon l'invention. L'échangeur thermique de cette chambre est constitué par la juxtaposition et la mise en parallèle de deux dispositifs identiques à 24 plaques creuses, larges de 20 cm, assemblées au pas de 10 mm, avec des écarts de 5 mm. Le plateau 190 mesure 40 cm de long, 33 cm de large et 3 mm d'épaisseur; il comporte quatre rangées 192₁₋₄, de 25 trous chacune, séparées par des écarts de 10 cm. Chaque rangée comporte 23 trous oblongs tels 193, larges de 6 et longs de 12 mm, et deux trous ronds d'extrémité, de 6 mm de diamètre. Les trous oblongs 193 sont disposés au-dessus des espaces séparant les plaques creuses et les trous ronds au-dessus des espaces entre les plaques extrêmes et les parois de la chambre de condensation. Le plateau 190 comporte trois bords 194₁₋₃ épais de 30 et hauts de 50 mm, pour assurer l'étanchéité du conduit d'air entre deux chambres de condensation superposées, et deux ouvertures 196₁₋₂ pour permettre le passage étanche de deux tubes de raccordement entre les deux échangeurs thermiques de chacune de ces chambres de condensation.

Pour commenter le fonctionnement du premier appareil 10 ou 100 de l'un ou l'autre des deux distillateurs de série concernés, on considérera que ce distillateur 100 est, dans un premier temps, virtuellement simplifié et agencé pour opérer de la même façon que le distillateur 10. Les données de base sont le débit massique Q_{E0} de l'eau répandue et les températures d'eau T_{E0}, T_{E2} et d'air T_{A0}. A titre d'exemple, Q_{E0} = 100 g/s et T_{E2} = 85°C, pour les deux appareils. Les distillateurs 10 et 100, opérant tous deux à courants d'air en boucle fermée et courants d'eau en boucle ouverte, on a T_{E0} = 20°C puis T_{A0} = 27°C et T_{A4} = 83°C. A partir de ces données, on applique la procédure de réglage longuement décrite plus haut pour le ventilateur et les sections de passage des ouvertures de cloison. On commence par déterminer les températures des courants d'air à établir au niveau des rangées de fentes 28, 30, 32 de la cloison 18 du distillateur 10 et des rangées semblables de la cloison 108 du distillateur 100. Avec les températures extrêmes de 27 et 83°C, on aura successivement (à peu près) 45, 61, 73°C et des échelons locaux de sensiblement 18, 16, 12 et 10°C. Ensuite, on répand de l'eau chaude, pendant un bon moment pour amener les composants de chaque appareil à une température appropriée, puis on met en marche le ventilateur 34 ou 116. La colonne d'évaporation 16 étant équipée de plaques verticales, à faces mouillables ou hydrophiles, juxtaposées à pas constants, et la colonne 104, de noix artificielles mouillables entassées en vrac, les passages offerts aux courants d'air et les pertes de charges y sont très différents. Dans ces conditions, il en est de même pour les surpressions de l'air à produire par les ventilateurs : de 100 à 200 Pascals pour le ventilateur 34 du distillateur 10 et 300 à 500 Pascals pour le ventilateur 116 du distillateur 100. De ce fait, dans le distillateur 10, les courants d'air montant ont des vitesses uniformes et ne risquent pas d'emporter des gouttes d'eau, ce qui permet aux rangées de fentes verticales 24, 26, 28, 32 de directement déboucher dans la colonne de condensation 16. En revanche, il n'en est pas de même dans le distillateur 100, puisque des courants d'air peuvent avoir des vitesses locales importantes entraînant des gouttes d'eau et de saumure, notamment dans la rangée de fentes disposée en amont de l'entrée de la chambre de transit 141₁ de l'étage de distillation de rang 1. Ces gouttes d'eau et de saumure emportées rendent nécessaire la présence des dévésiculeurs 145₁₋₄ - 146₁₋₄, qui les bloquent et les renvoient dans les chambres d'évaporation.

On règle les débits des ventilateurs 34 ou 116, pour provisoirement amener à 45°C la température T_{A1} de l'air traversant la rangée de fentes de rang 1 des cloisons 18 ou 108 des distillateurs 10 et 100. Puis, au moyen des caches 174 ou de vannes 148₁₋₃ on règle les sections de passage des ouvertures concernées de la cloison 18 du distillateur 10 ou celles de la cloison 108 du distillateur 100, pour avoir les températures T_{A2} = 61°C puis T_{A3} = 73°C, aux sommets des chambres d'évaporation de rangs 2 et 3. Ensuite, on réajuste les réglages des caches 174 ou des vannes 148 de rang n, pour que deviennent égales la température T_{An}, à l'entrée de la chambre d'évaporation de rang n, et celle T_{An*}, en sortie de la chambre de condensation de même rang. Ces températures ont alors des valeurs optimales de consigne T_{A1C}, T_{A2C} et T_{A3C}, lesquelles ne diffèrent des températures initiales que d'un écart < 1,5°C. Puis on corrige légèrement la vitesse du ventilateur pour maximiser la température T_{E1} de l'eau en sortie de la colonne de condensation et la rapprocher au mieux de T_{E2}, jusqu'à T_{E1} =.75°C par exemple.

Cela étant fait, le bac 54 ou 126 reçoit une quantité horaire d'eau distillée de 40 litres et, avec les valeurs indiquées ci-dessus pour T_{E0}, T_{E1} et T_{E2}, le CoP = 6,5. La puissance thermique fournie à l'appareil par la chaudière est P_{Ch} = 3,8 kW et celle utilisée en distillation P_{Dist} = 24,7 kW, de sorte que la conductance thermique globale apparente des colonnes d'évaporation et de condensation du distillateur 10 ou 100 s'établit à CT = P_{Dist}/ (T_{E2} - T_{E1}) = 2470 W/K.

Ensuite, on relève les valeurs des réglages des commandes des ventilateurs 34 et 116 ainsi que de celles des réglages des sections de passage des communications entre chambres des unités de distillation et on utilise ces valeurs comme spécifications de construction des appareils de série. Ce seront des fréquences pour les moteurs synchrones des ventilateurs et des valeurs, précises au dixième de millimètre, pour les quatre rangées de fentes verticales de l'appareil 10 et pour les fentes horizontales des quatre cloisons remplaçant les vannes ajustées de l'appareil 100. Quant aux dimensions des trous des plateaux 25₁₋₄ et 123₁₋₄, elles sont calculées pour chaque chambre de condensation, en fonction des débits volumiques approchés d'air chaud humide saturé Q_{S1} à Q_{S4} circulant dans ces quatre chambres.

Les distillateurs d'eau ainsi construits sont destinés à opérer avec des paramètres d'entrée Q_{E0} et T_{E2} constants. Aussi longtemps qu'il en est ainsi, le CoP de l'appareil est maximal, mais lorsque pour une raison quelconque la valeur de l'un et/ou l'autre de ces paramètres s'écarte quelque peu de sa valeur initiale, les performances globales du distillateur sont modérément abaissées, sans pour autant ne pas demeurer satisfaisantes.

Dans le cas du distillateur 10 ou du distillateur 100 simplifié, traitant tous deux de l'eau de mer ou de l'eau saumâtre, notamment fossile, l'eau distillée est recueillie puis transformée en eau potable, par adjonction de sels minéraux appropriés, cependant que l'eau de mer faiblement concentrée en sel est directement rejetée à la mer.

Dans le cas du distillateur 100 décrit, opérant en générateur de concentré d'eau industrielle, le courant d'air circule en boucle ouverte ou fermée et le courant d'eau, en boucle fermée. Le concentré, préalablement refroidi dans le dispositif 119 (il devient source froide unique quand l'air circule en boucle fermée) est recueilli dans le réservoir 152 et il est recyclé jusqu'à ce que sa concentration soit suffisante. Pour ce faire, l'eau polluée, à concentration progressive, contenue dans le réservoir 152, est aspirée par la pompe 156 et injectée dans le collecteur amont de l'échangeur thermique 120₁ de la colonne de condensation 106. Lorsque cette concentration est suffisante, la pompe 156 est arrêtée, l'électrovanne 160 de vidage du réservoir 152 est actionnée et un volume donné d'eau industrielle, fortement concentrée (5 à 10 fois), est stocké dans une citerne éloignée, en attente d'enlèvement. Dès la fin de cette opération, un volume d'eau industrielle fraîche est déversé dans ce réservoir 152, en actionnant l'électrovanne 166 pendant une durée appropriée. Ensuite, la pompe 156 redémarre. Le cycle de ces opérations est déterminé à la suite d'essais, en fonction de l'efficacité de l'appareil ; les électrovannes 160 et 166 ainsi que la pompe 156, sont commandées selon ce cycle, par un programmeur automatique. Le coût de destruction d'un concentré d'eau polluée est diminué en accord avec le taux de concentration réalisé. De son côté, l'eau distillée peut être récupérée pour un usage local ou rejetée dans la nature. Avec les mêmes sous-ensembles complémentaires, un distillateur 10, à colonne d'évaporation équipée de plaques à faces mouillables, peut être transformé en appareil pour produire un concentré d'eau industrielle. Et, de son côté, un distillateur 100 peut être utilisé pour produire de l'eau distillée et de la saumure fortement concentrée.

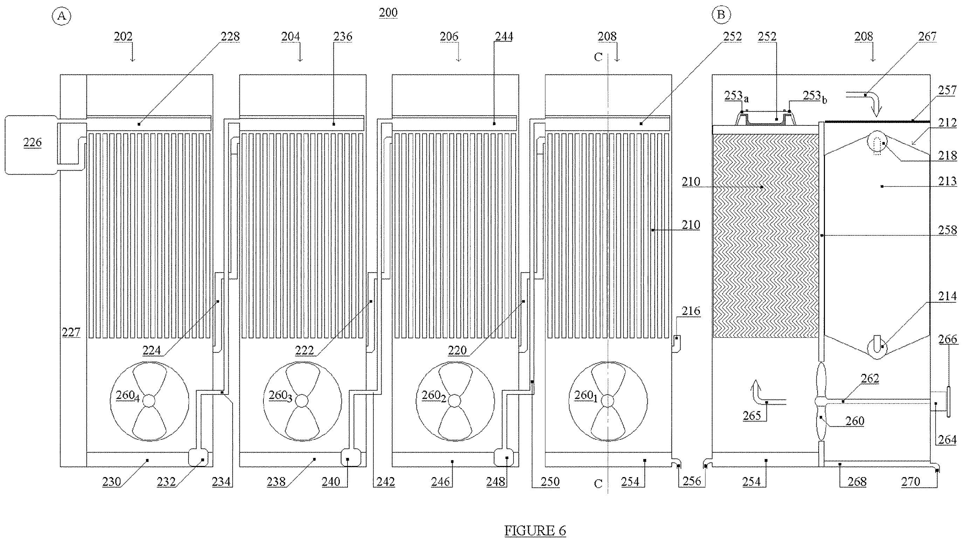

La figure 6 représente en A le schéma d'un distillateur d'eau 200, formé par quatre unités de distillation juxtaposées, vues de face, 202, 204, 206 et 208, semblables aux étages de distillation des figures 1-2, ayant respectivement des rangs 4, 3, 2 et 1. En B, la figure 6 représente le schéma de l'unité de distillation 208, vue en coupe CC.

Dans chacune des chambres d'évaporation de ces unités, sont disposées verticales, à pas constant de 15 mm, cent plaques non métalliques 210, à faces mouillables du fait de reliefs appropriés, épaisses de 6 mm, larges de 80 cm et hautes de 125 cm. La surface totale d'échange de ces plaques est de 200 m² et le volume d'une chambre d'évaporation est 1,5 m³. Dans chacune des chambres de condensation, l'échangeur thermique 212 est du même type que ceux des figures 1 et 2 (plaques creuses extrudées-soufflées, à collecteurs amont et aval soudés). Chaque échangeur 212 comprend cent cinquante plaques creuses verticales 213, larges de 80 et hautes de 125 cm, assemblées au pas de 10 mm. La surface totale d'échange des plaques est de 300 m² et le volume de chaque chambre de condensation, de 1,5 m³. Le raccord amont 214 de l'échangeur thermique 212 de l'unité la moins chaude 208 est relié à une borne 216 d'alimentation en eau de mer, à température ambiante (20°C) et surpression appropriée. Le raccord aval 218 de cet échangeur 212 est relié à un conduit calorifugé 220 qui aboutit au raccord amont de l'échangeur thermique de l'unité de distillation 206. Il en est de même, pour les unités 204 et 202 dans lesquelles des conduits calorifugés 222 et 224 relient le raccord aval, de l'échangeur thermique de la première, au raccord amont de l'échangeur de la seconde. Le raccord aval de l'échangeur de l'unité la plus chaude 202 est relié à l'entrée d'une chaudière 226 dont la sortie est reliée à une bassine 228, alimentant les gouttières individuelles d'épandage (non représentées) des plaques mouillables 210. Le plancher de la chambre d'évaporation de l'unité 202 est aménagé en bac 230 de collecte de l'eau de mer, à teneur augmentée en sel, qui s'écoule de ses plaques mouillables 210. Dans ce bac 230 est installée une pompe 232 reliée, par un conduit calorifugé 234, à la bassine 236 du dispositif d'épandage de l'unité 204, laquelle comporte un bac de collecte 238 et une pompe 240. Cette pompe 240 est reliée par un conduit calorifugé 242 à la bassine 244 du dispositif d'épandage de l'unité 206, laquelle comporte un bac de collecte 246 et une pompe 248. Cette pompe 248 est reliée par un conduit calorifugé 250 à la bassine 252 du dispositif d'épandage de l'unité 208, laquelle comporte un bac de collecte 254 doté d'un conduit d'évacuation 256. Comme les précédentes, la bassine 252, représentée en B de la figure 5, est dotée de cent paires de déversoirs à débordement 253 a-b, alimentant les gouttières d'épandage des cent plaques 210. Sur cette figure 5B, au-dessus des chambres de condensation sont disposés des plateaux à rangées de trous 257, semblables aux plateaux 25 et 123, des figures 1 et 2. Dans une ouverture basse pratiquée dans une cloison 258 séparant les chambres d'évaporation et de condensation de l'unité 208, est installée une hélice 260, reliée par un arbre 262 au moteur synchrone d'un ventilateur. Ce moteur et son alimentation à fréquence variable sont représentés par le bloc 264, extérieur à la chambre de condensation. Ce bloc comprend soit une commande manuelle, dotée d'un cadran 266, soit une commande automatique pilotée par un calculateur. Les quatre unités 202, 204, 206 et 208 sont équipées d'hélices internes semblables 260₁₋₄ et de blocs moteurs externes 264₁₋₄. Les puissances de ces moteurs et/ou les pas de ces hélices sont adaptés aux conditions de fonctionnement de chaque unité. Les flèches 265 et 267 indiquent le sens de circulation en circuit fermé des courants d'air engendrés par les ventilateurs. L'eau distillée est collectée dans un bac 268, installé au pied de chaque chambre de condensation. Tous ces bacs sont raccordés à un tuyau d'évacuation 270. La continuité des températures, entre ces unités de distillation juxtaposées, est assurée par le courant d'eau montant ou descendant, passant d'une unité à l'autre.

Ce distillateur à quatre unités de distillation juxtaposées est bien adapté à des productions journalières importantes d'eau distillée. Pour une puissance de la chaudière 226 de 120 kW et un débit massique Q_{E0} de 4.5 kg/s d'eau à distiller, la production journalière est d'environ 30 m³/jour, pour le distillateur 200. Et, en outre, celui-ci convient particulièrement bien à des situations dans lesquelles la puissance thermique disponible est variable, notamment en cours de journée, et impose des débits massiques d'eau évoluant plus ou moins dans les mêmes conditions. Dans ce cas, un calculateur, comportant le logiciel approprié défini plus haut, fournit les réglages des blocs moteurs, dès lors que les paramètres Q_{E0}, T_{E2}, T_{E0} et T_{A0} y sont entrés. Ces réglages sont ensuite effectués de deux façons possibles : (1) relever sur l'écran du calculateur les repères de consigne de cadrans associés aux commandes de ces quatre fréquences et afficher manuellement ces repères sur ces cadrans, ou (2) programmer le calculateur pour lui faire directement régler les moyens de commande de ces quatre fréquences.

Les modifications à apporter aux appareils 10 et 100, à unités de distillation superposées, représentés aux figures 1 et 2, pour les transformer en appareils, dans lesquels les courants d'air dans les étages de distillation sont indépendants les uns des autres, découlent des définitions mêmes de ces appareils. Entre quatre étages, à peu près identiques à celui de rang 1 sur ces deux figures, ce seront des cloisons horizontales traversées par des tubes de liaison entre échangeurs thermiques, auxquelles s'ajouteront dans chaque étage des moyens de collecte et d'épandage de l'eau à distiller, identiques à ceux de la figure 6. Une figure illustrant un distillateur d'eau, selon la figure 1 ou 2, pourvu de ces compléments banals n'est donc pas utile. Par ailleurs, il peut être intéressant de combiner ces deux formes de réalisation et de constituer des groupes formés par deux unités de distillation superposées et ensuite de juxtaposer ces groupes. Cela convient à des unités de distillation de hauteur moyenne (< 120 cm) qui peuvent être aisément superposées, sans entraîner de problèmes de manutention particulier.

L'invention n'est pas limitée aux formes de réalisation décrites aux figures 1, 2 et 6.

En effet, les composants des chambres d'évaporation et de condensation peuvent être différents de ceux présentés (plaques à faces hydrophiles ou mouillables, noix mouillables en céramique ou polymère). Dans tous les cas, ces composants seront non métalliques, pour éviter des problèmes de corrosion et un coût trop élevé. Pour les chambres d'évaporation, cela peut être tout support plan mince, notamment formé par une nappe tissée hydrophile tendue, ou encore des noix artificielles en terre cuite. Pour les chambres de condensation, on pourra utiliser des échangeurs thermiques, formés par des plaques alvéolaires du commerce, dotées de collecteurs primaires, raccordés à des collecteurs secondaires amont et aval. Dans le distillateur 200, à unités de distillation juxtaposées, les chambres d'évaporation pourront être garnies de noix artificielles mouillables et les communications entre le couple de chambres de chaque unité comporteront des dévésiculeurs. En plus des distillateurs standards, construits préréglés, des appareils identiques au premier de chaque série, incluant la plupart de ses moyens de mesure et de réglage, pourront évidemment être commercialisés, pour satisfaire des clients particuliers.

## Revendications

1. Distillateur d'eau (10 ou 100 ou 200), à courants d'air chaud humide saturé et à récupération de chaleur latente de condensation, du genre dans lequel:
- un nombre N d'unités de distillation est aménagé, l'unité de rang 1 étant la moins chaude et celle de rang N, la plus chaude;
- chacune de ces N unités de distillation comprend un couple de chambres verticales, l'une d'évaporation d'eau et l'autre de condensation de vapeur, communiquant par le haut;
- chacune de ces N chambres d'évaporation est occupée par un ensemble de composants mouillables ou hydrophiles (20 ou 104 ou 210);
- chacune de ces N chambres de condensation est occupée par un dispositif creux d'échange thermique (22 ou 120 ou 212), ces N dispositifs étant montés en série;
- des moyens (38 ou 153 ou 216) sont raccordés à l'appareil pour lui fournir un courant d'eau, à débit massique Q_{E0}, à température initiale basse T_{E0}, pour faire circuler ce courant d'eau de bas en haut dans les N dispositifs creux d'échange thermique;
- une chaudière (42 ou 134 ou 226) est raccordée à la sortie des N dispositifs creux d'échange thermique, pour porter à une température haute T_{E2}, inférieure à 100°C, le courant d'eau à température T_{E1} qui en sort;
- des moyens (52 ou 142 ou 228-236-244-252) sont installés dans l'appareil pour répandre cette eau chaude à température T_{E2}, en haut des composants de la chambre d'évaporation de rang N et pour la faire ruisseler le long des composants des chambres d'évaporation de rangs (N-1) à 1;
- des moyens (34 et 170-172) ou (116 et 148₁₋₄) ou (260₁₋₄) sont installés dans l'appareil pour forcer N débits ajustés d'air chaud humide saturé à circuler, de bas en haut dans les N chambres d'évaporation et de haut en bas dans les N chambres de condensation, afin de respectivement porter les N courants d'air, circulant en haut des chambres d'évaporation, à des températures prédéterminées T_{A1} à T_{AN}, lesdits moyens comprenant des moyens pour insuffler de l'air en bas de la chambre d'évaporation de rang 1 et des moyens de réglage des sections de passage des communications entre chambres des unités de distillation;
- des moyens pour recueillir les débits d'eau distillée (56 ou 126 ou 266) sont installés en bas de la chambre de condensation de rang 1 ;
- des moyens pour recueillir les débits de solution aqueuse concentrée (60 ou 119 ou 254) sont installés en bas de la chambre d'évaporation de rang 1;
**caractérisé en ce que**:
- les N dispositifs d'échange thermique (22₁₋₆ ou 120₁₋₄ ou 212) ont des sections et des hauteurs sensiblement identiques à celles des N chambres de condensation;
- ces N dispositifs d'échange thermique sont des groupes de plaques creuses en polymère (23, 121, 213), assemblées séparées à pas constant, chaque groupe étant doté de collecteurs amont et aval;
- dans les N chambres de condensation, les plaques creuses sont installées verticales.

2. Distillateur d'eau (10 ou 100 ou 200), selon la revendication 1, **caractérisé en ce qu'**il comporte N plateaux perforés (25₁₋₄, 123₁₋₄, 257, 190), aptes à répartir les débits totaux d'air, entrant respectivement dans les N chambres de condensation, en débits d'air partiels sensiblement égaux, pénétrant dans les espaces séparant les plaques creuses (23, 121, 213) de ces chambres.

3. Distillateur d'eau (10 ou 100 ou 200), selon la revendication 2, **caractérisé en ce que**, dans chacune des N unités de distillation:
- la communication, entre les chambres d'évaporation et de condensation, comporte une fenêtre rectangulaire allongée horizontale (170, 150);
- la section de la chambre de condensation, le plateau perforé (25₁₋₄, 123₁₋₄, 257, 190) et les plaques creuses (23, 121, 213) sont rectangulaires;
- le plateau perforé est installé sans fuites latérales notables et il comporte des rangées (192₁₋₄) de trous (193), surmontant toutes les plaques creuses (23, 121, 213);
- ces trous (193) sont oblongs et percés au pas d'assemblage des plaques, leur largeur étant sensiblement égale à celle des espaces entre plaques.

4. Distillateur d'eau selon la revendication 1, 2 ou 3, du genre dans lequel
- les N unités de distillation sont superposées, formant deux colonnes d'évaporation et de condensation;
- et un ventilateur est installé en bas de la colonne d'évaporation
**caractérisé en ce que**:
- les N chambres d'évaporation comportent des supports plans minces, à faces mouillables (210) ou hydrophiles (20), installés verticaux, à pas constant
• les N communications, entre les couples de chambres, sont N rangées horizontales (170) de fentes verticales (172), au même pas que le précédent, pratiquées dans une cloison (18) séparant les deux chambres;
• la commande du ventilateur (34) est préréglée et les sections de passage respectives des rangées de fentes (170-172) sont fixes;
• cette commande du ventilateur (34) et ces sections de fentes ont été établies en accord avec les spécifications de construction découlant des réglages manuels finaux du premier appareil d'une série d'appareils identiques

5. Distillateur d'eau, selon la revendication 1, 2 ou 3, du genre dans lequel:
- les N unités de distillation sont superposées, formant deux colonnes d'évaporation et de condensation;
- les N chambres d'évaporation sont garnies de noix artificielles mouillables, entassées en vrac;
- un ventilateur (116) est installé en bas de la colonne d'évaporation
**caractérisé en ce que**:
• les N communications, entre les couples de chambres, sont des conduits, à section rectangulaire allongée, comportant en amont une zone perforée horizontale (170-172), apte à bloquer lesdites noix et à laisser passer l'air, et en aval, ladite fenêtre rectangulaire allongée horizontale (150₁₋₄)
• - dans chacun des N conduits(144₁₋₄ - 150₁₋₄), en aval immédiat de la zone perforée, est installé un dévésiculeur (145₁₋₄ - 146₁₋₄),, suivi d'une cloison comportant une fente rectangulaire horizontale (170-172)), soit une vanne à boisseau réglable (148₁₋₃),
• la commande du ventilateur (116) est préréglée et les largeurs respectives de ces N fentes horizontales sont fixes;
• cette commande du ventilateur et ces largeurs de fentes ont été établies en accord avec les spécifications de construction découlant des réglages manuels finaux du premier appareil d'une série d'appareils identiques.

6. Distillateur d'eau, selon la revendication 1, 2 ou 3, du genre dans lequel les N unités de distillation sont superposées et constituent deux colonnes, l'une d'évaporation et l'autre de condensation;
**caractérisé en ce que**
- ces N étages de distillation sont séparés les uns des autres par (N-1) cloisons horizontales;
- deux communications, l'une en haut et l'autre en bas, sont établies entre les chambres verticales d'évaporation et de condensation de chaque étage de distillation;
- N ventilateurs à débits ou ajustables, notamment au moyen de moteurs synchrones externes aux chambres de condensation, ont leurs hélices installées dans les communications basses des N étages de distillation, pour produire N courants d'air indépendants circulant respectivement dans ces N étages;
- les ensembles de composants creux des chambres de condensation de ces N étages de distillation sont raccordés entre eux par des tubes traversant ces (N-1) cloisons horizontales;
- en haut et en bas des composants hydrophiles ou mouillables des chambres d'évaporation de ces N étages de distillation, sont respectivement installés des moyens d'épandage et de collecte de l'eau circulant dans la colonne d'évaporation, les moyens d'épandage des chambres d'évaporation de rangs (N-1) à 1 étant respectivement alimentés par les moyens de collecte des chambres de rangs N à 2.

7. Distillateur d'eau (200), selon la revendication 1 ou 2, **caractérisé en ce que**:
- les N unités de distillation (202, 204, 206, 208) sont juxtaposées;
- deux communications, l'une en haut et l'autre en bas, sont établies entre les chambres verticales d'évaporation et de condensation de chaque unité de distillation;
- N ventilateurs (260₁₋₄, 262₁₋₄, 264₁₋₄) à débits ajustables, notamment au moyen de moteurs synchrones (264₁₋₄, 266₁₋₄) externes aux chambres de condensation, ont leurs hélices (260₁₋₄) installées dans les communications basses des N unités de distillation, pour produire N courants d'air indépendants circulant respectivement dans ces N unités;
- les N dispositifs creux d'échange thermique (212) de ces N chambres de condensation, sont raccordés entre eux par (N-1) conduits calorifugés (220, 222, 224);
- les N ensembles de composants hydrophiles ou mouillables (212), des N chambres d'évaporation, comportent en haut et en bas de leurs extrémités respectives des moyens d'épandage (228, 236, 244, 252) et des moyens de collecte d'eau à distiller (230, 238, 246, 254);
- (N-1) pompes (232, 240, 248) et (N-1) conduits calorifugés (234, 242, 250) sont installés entre les N chambres d'évaporation, pour amener l'eau recueillie, par les moyens de collecte des unités de distillation de rangs N à 2, à se déverser dans les moyens d'épandage des unités de rangs (N-1) à 1.

8. Distillateur d'eau (200), selon la revendication 6 ou 7, **caractérisé en ce que**:
- des courants d'air (flèches 76-78-80) entrent dans cette colonne 16, par l'ouverture 24 aménagée au sommet de la cloison 18 et descendent dans la colonne de condensation 16;
- dans un premier appareil 10 d'une série de distillateurs identiques, plusieurs thermocouples mesurant les températures TA1 à TA4 et TA1* à TA4* sont installés à des emplacements remarquables de ce distillateur;
- ces thermocouples sont reliés à un circuit de conversion numérique et d'affichage;
- deux thermocouples, respectivement installés dans des inserts métalliques creux, engagés étanches dans des trous pratiqués à travers la paroi des conduits d'entrée 38 et de sortie 39 de la colonne de condensation 16 mesurent TE0 et TE1 et un troisième thermocouple placé dans la chaudière 40 mesure TE2;
- cinq thermocouples, respectivement situés en face des ouvertures haute 24, basse 26, et intermédiaires 28, 30, 32 de la cloison 18, mesurent TA0 à TA4.

9. Distillateur d'eau selon les revendications 6 et 7, **caractérisé en ce que** le nombre d'unités de distillation étant pair, cet appareil est constitué par des groupes juxtaposés comprenant chacun deux unités superposées.

10. Distillateur d'eau (200) selon l'une des revendications 6 ou 7, **caractérisé en ce que** la chambre d'évaporation de chaque unité de distillation étant garnie de noix artificielles mouillables, un dévésiculeur (145₁₋₄ - 146₁₋₄) est installé dans la communication établie entre les hauts de cette chambre d'évaporation et de sa chambre de condensation.

11. Distillateur d'eau (100), selon l'une des revendications 4 à 10, constituant un appareil pour concentrer une eau industrielle, **caractérisé en ce qu'**il comporte:
- un premier conduit (118) pour récupérer la solution aqueuse concentrée, coulant en bas de la chambre d'évaporation (104) de rang 1, ce conduit (118) alimentant un dispositif de refroidissement naturel (119) débouchant au-dessus d'un réservoir (152);
- une pompe (156) pour aspirer le contenu de ce réservoir (152) et l'injecter en bas des composants creux de la chambre de condensation (106) de rang 1, afin de faire circuler en boucle fermée dans l'appareil un courant de solution aqueuse concentrée;
- un deuxième conduit (128) pour assurer en permanence l'évacuation, en vue d'une récupération ou d'une élimination, du débit d'eau distillée produit;
- un troisième conduit (158) associé à une première électrovanne (160), pour assurer l'évacuation en vue d'une récupération du volume de solution aqueuse concentrée, contenu dans le réservoir (152);
- un quatrième conduit (164) associé à une seconde électrovanne (166) pour assurer le remplacement du contenu du réservoir par un nouveau volume d'eau industrielle;
- les deux électrovannes (160-166) opèrent selon une période déterminée par l'efficacité de l'appareil.

## Patentansprüche

1. Wasserdestillationsvorrichtung (10 oder 100 oder 200) unter Verwendung gesättigter feuchter Luftströme und unter Verwendung einer Rückgewinnung latenter Kondensationswärme der Art, dass:
- eine Anzahl N von Destillationseinheiten angeordnet ist, wobei die Einheit des Rangs 1 die am wenigsten heiße ist und jene des Rangs N die heißeste ist;
- jede dieser N Destillationseinheiten ein Paar von vertikalen Kammern umfasst, die eine zur Verdampfung von Wasser und die andere zur Kondensation von Dampf, die von oben kommunizieren;
- jede dieser N Verdampfungskammern mit einer Anordnung von benetzbaren oder hydrophilen Komponenten (20 oder 104 oder 210) besetzt ist;
- jede dieser N Kondensationskammern mit einer hohlen Wärmeaustauschvorrichtung (22 oder 120 oder 212) besetzt ist, wobei diese N Vorrichtungen in Serie montiert sind;
- Mittel (38 oder 153 oder 216) mit der Apparatur verbunden sind, um ihr einen Wasserstrom mit einem Massendurchsatz Q_{EO} bei einer niedrigen Anfangstemperatur T_{EO} zuzuführen, um diesen Wasserstrom von unten nach oben in den N hohlen Wärmeaustauschvorrichtungen zirkulieren zu lassen;
- ein Heizer (42 oder 134 oder 226) mit dem Ausgang der N hohlen Wärmeaustauschvorrichtungen verbunden ist, um den Wasserstrom mit der Temperatur T_{E1} auf eine hohe Temperatur T_{E2} unter 100 °C zu bringen, der daraus austritt;
- Mittel (52 oder 142 oder 228-236-244-252) in der Apparatur installiert sind, um dieses heiße Wasser auf die Temperatur T_{E2} oben auf den Komponenten in der Verdampfungskammer des Rangs N zu bringen, und um es entlang der Komponenten der Verdampfungskammern der Ränge (N-1) bis 1 strömen zu lassen;
- Mittel (34 und 170-172) oder (116 und 148₁₋₄) oder (260₁₋₄) in der Apparatur installiert sind, um N eingestellte Durchsätze von gesättigter feuchter heißer Luft von unten nach oben in den N Verdampfungskammern und von oben nach unten in den N Kondensationskammern zum Zirkulieren zu bringen, um jeweils die N Luftströme, die oben in den Verdampfungskammern zirkulieren, auf vorherbestimmte Temperaturen T_{A1} und T_{AN} zu bringen, wobei die Mittel Mittel zum Einblasen der Luft nach unten in der Verdampfungskammer des Rangs 1 und Mittel zum Regeln der Durchgangsquerschnitte von Kommunikationen zwischen den Kammern der Destillationseinheiten umfassen;
- Mittel (56 oder 126 oder 266) zum Aufnehmen der Durchsätze von destilliertem Wasser unten in der Kondensationskammer des Rangs 1 installiert sind;
- Mittel (60 oder 119 oder 254) zum Aufnehmen der Durchsätze einer konzentrierten wässrigen Lösung unten in der Verdampfungskammer des Rangs 1 installiert sind;
**dadurch gekennzeichnet, dass**:
- die N Wärmeaustauschvorrichtungen (22₁₋₆ oder 120₁₋₄ oder 212) Querschnitte und Höhen aufweisen, die im Wesentlichen identisch sind mit jenen der N Kondensationskammern;
- diese N Wärmeaustauschvorrichtungen Gruppen von hohlen Polymerplatten (23, 121, 213) sind, die getrennt mit konstantem Abstand assembliert sind, wobei jede Gruppe mit stromaufwärtigen und stromabwärtigen Kollektoren versehen ist;
- in den N Kondensationskammern die hohlen Platten vertikal installiert sind.

2. Wasserdestillationsvorrichtung (10 oder 100 oder 200) nach Anspruch 1, **dadurch gekennzeichnet, dass** sie N perforierte Platten (25₁₋₄, 123₁₋₄, 257, 190) umfasst, die dafür geeignet sind, um die Gesamtluftdurchsätze, die jeweils in die N Kondensationskammern eintreten, in im Wesentlichen gleiche Teilluftdurchsätze zu teilen, die in die Zwischenräume eindringen, welche die hohlen Platten (23, 121, 123) dieser Kammern trennen.

3. Wasserdestillationsvorrichtung (10 oder 100 oder 200) nach Anspruch 2, **dadurch gekennzeichnet, dass** in jeder der N Destillationseinheiten:
- die Kommunikation zwischen den Verdampfungs- und Kondensationskammern ein horizontales längliches rechteckiges Fenster (170, 150) umfasst;
- der Querschnitt der Kondensationskammer, die perforierte Platte (25₁₋₄, 123₁₋₄, 257, 190) und die hohlen Platten (23, 121, 123) rechteckig sind;
- die perforierte Platte ohne merkbare laterale Fluchten installiert ist und sie Reihen (192₁₋₄) von Löchern (193) umfasst, die über allen hohlen Platten (23, 121, 123) liegen;
- diese Löcher (193) länglich und mit dem Assemblierungsabstand der Platten gebohrt sind, wobei ihre Breite im Wesentlichen gleich ist jener der Zwischenräume zwischen Platten.

4. Wasserdestillationsvorrichtung nach Anspruch 1, 2 oder 3 der Art, dass:
- die N Destillationseinheiten übereinander angeordnet sind, wobei sie zwei Verdampfungs- und Kondensationssäulen bilden;
- und ein Gebläse unten an der Verdampfungssäule installiert ist;
**dadurch gekennzeichnet, dass**:
- die N Verdampfungskammern ebene dünne Träger mit benetzbaren (210) oder hydrophilen (20) Flächen umfassen, die vertikal mit konstantem Abstand installiert sind;
• die N Kommunikationen zwischen den Paaren von Kammern N horizontale Reihen (170) von vertikalen Schlitzen (172) mit demselben Abstand wie der vorhergehende sind, die in einer Trennwand (18) ausgeführt sind, welche die beiden Kammern trennt;
• die Steuerung des Gebläses (34) vorgeregelt ist, und die jeweiligen Durchgangsquerschnitte der Reihen von Schlitzen (170-172) festgelegt sind;
• diese Steuerung des Gebläses (34) und diese Querschnitte der Schlitze gemäß den Konstruktionsspezifikationen festgelegt wurden, die sich aus manuellen Endregelungen der ersten Apparatur von einer Serie identischer Apparaturen ergeben.

5. Wasserdestillationsvorrichtung nach Anspruch 1, 2 oder 3 der Art, dass:
- die N Destillationseinheiten übereinander angeordnet sind, wobei sie zwei Verdampfungs- und Kondensationssäulen bilden;
- die N Verdampfungskammern mit benetzbaren künstlichen Nüssen versehen sind, die als Schüttgut angehäuft sind;
- ein Gebläse (116) am Boden der Verdampfungssäule installiert ist;
**dadurch gekennzeichnet, dass**:
• die N Kommunikationen, zwischen den Paaren von Kammern, Leitungen mit länglichem rechteckigen Querschnitt sind, die stromaufwärts eine horizontale perforierte Zone (170-172), die dafür geeignet ist, die Nüsse zu blockieren und die Luft hindurchzulassen, und stromabwärts das horizontale längliche rechteckige Fenster (150₁₋₄) umfassen;
• in jeder der N Leitungen (144₁₋₄ - 150₁₋₄), unmittelbar stromabwärts von der perforierten Zone, ein Abscheider (145₁₋₄ - 146₁₋₄) installiert ist, gefolgt von einer Trennwand, die einen horizontalen rechteckigen Schlitz (170-172) umfasst, d.h. ein Ventil mit einem regelbaren Schieber (148₁₋₃);
• die Steuerung des Gebläses (116) vorgeregelt ist, und die jeweiligen Breiten dieser N horizontalen Schlitze festgelegt sind;
• wobei diese Steuerung des Gebläses und die Breiten der Schlitze gemäß den Konstruktionsspezifikationen festgelegt wurden, die sich aus manuellen Endregelungen der ersten Apparatur von einer Serie identischer Apparaturen ergeben.

6. Wasserdestillationsvorrichtung nach Anspruch 1, 2 oder 3 der Art, dass die N Destillationseinheiten übereinander angeordnet sind und zwei Säulen bilden, die eine zur Verdampfung und die andere zur Kondensation;
**dadurch gekennzeichnet, dass**:
- diese N Destillationsstufen voneinander durch (N-1) horizontale Trennwände getrennt sind;
- zwei Kommunikationen, die eine oben und die andere unten, zwischen den vertikalen Verdampfungs- und Kondensationskammern jeder Destillationsstufe hergestellt sind;
- N Gebläse, mit einstellbaren Durchsätzen, insbesondere mit Hilfe von Synchronmotoren extern von den Kondensationskammern, ihre Propeller in den unteren Kommunikationen der N Destillationsstufen installiert aufweisen, um N unabhängige Luftströme zu erzeugen, die jeweils in diesen N Stufen zirkulieren;
- die Gesamtheit der hohlen Komponenten der Kondensationskammern dieser N Destillationsstufen miteinander durch Rohre verbunden sind, die diese (N-1) horizontalen Trennwände durchqueren;
- oben und unten von den hydrophilen oder benetzbaren Komponenten der Verdampfungskammern dieser N Destillationsstufen jeweils Mittel zum Verteilen und zum Sammeln von Wasser installiert sind, das in der Verdampfungssäule zirkuliert, wobei die Verteilungsmittel der Verdampfungskammern der Ränge (N-1) bis 1 jeweils von den Sammelmitteln der Kammern der Ränge N bis 2 gespeist werden.

7. Wasserdestillationsvorrichtung (200) nach Anspruch 1 oder 2, **dadurch gekennzeichnet, dass**:
- die N Destillationseinheiten (202, 204, 206, 208) nebeneinanderliegen;
- zwei Kommunikationen, die eine oben und die andere unten, zwischen den vertikalen Verdampfungs- und Kondensationskammern jeder Destillationseinheit hergestellt sind;
- N Gebläse (260₁₋₄, 262₁₋₄, 264₁₋₄,) mit einstellbaren Durchsätzen, insbesondere mit Hilfe von Synchronmotoren (264₁₋₄, 266₁₋₄) extern von den Kondensationskammern, ihre Propeller (260₁₋₄) in den unteren Kommunikationen der N Destillationseinheiten installiert aufweisen, um N unabhängige Luftströme zu erzeugen, die jeweils in diesen N Einheiten zirkulieren;
- die N hohlen Wärmeaustauschvorrichtungen (212) dieser N Kondensationskammern miteinander durch (N-1) thermisch isolierte Rohre (220, 222, 224) verbunden sind;
- die N Anordnungen von hydrophilen oder benetzbaren Komponenten (212) der N Verdampfungskammern oben und unten von ihren jeweiligen Enden Verteilungsmittel (228, 236, 244, 252) und Sammelmittel (230, 238, 246, 254) für destilliertes Wasser umfassen;
- (N-1) Pumpen (232, 240, 248) und (N-1) thermisch isolierte Rohre (234, 242, 250) zwischen den N Verdampfungskammern installiert sind, um das Wasser, das durch die Sammelmittel der Destillationseinheiten der Ränge N bis 2 rückgewonnen wird, zu leiten, um sich in die Verteilungsmittel der Einheiten der Ränge (N-1) bis 1 zu ergießen.

8. Wasserdestillationsvorrichtung (200) nach Anspruch 6 oder 7, **dadurch gekennzeichnet, dass**:
- Luftströme (Pfeile 76-78-80) in diese Säule 16 durch die Öffnung 24 eintreten, die am Scheitel der Trennwand 18 angeordnet ist und in die Kondensationssäule 16 führt;
- in einer ersten Apparatur 10 von einer Serie identischer Destillationsvorrichtungen mehrerer Thermoelemente, welche die Temperaturen TA1 bis TA4 und TA1* bis TA4* messen, an auffallenden Orten dieser Destillationsvorrichtung installiert sind;
- wobei diese Thermoelemente mit einer Schaltung zur digitalen Umwandlung und zur Anzeige verbunden sind;
- zwei Thermoelemente, welche jeweils in hohlen metallischen Einsätzen installiert sind, die dicht mit den Löchern in Eingriff stehen, welche quer durch die Wand der Eingangs- 38 und Ausgangs- 39 leitungen der Kondensationssäule 16 ausgeführt sind, TE0 und TE1 messen, und ein drittes Thermoelement, das in dem Heizer 40 platziert ist, TE2 misst;
- fünf Thermoelemente, die jeweils vor den oberen 24, unteren 26 und dazwischenliegenden 28, 30, 32 Öffnungen der Trennwand 18 angeordnet sind, TA0 bis TA4 messen.

9. Wasserdestillationsvorrichtung nach den Ansprüchen 6 und 7, **dadurch gekennzeichnet, dass** die Anzahl von Destillationseinheiten gerade ist, und diese Apparatur aus nebeneinanderliegenden Gruppen besteht, die jeweils zwei übereinander angeordnete Einheiten umfassen.

10. Wasserdestillationsvorrichtung (200) nach einem der Ansprüche 6 oder 7, **dadurch gekennzeichnet, dass** die Verdampfungskammer jeder Destillationseinheit mit benetzbaren künstlichen Nüssen versehen ist, und ein Abscheider (145₁₋₄ - 146₁₋₄) in der Kommunikation installiert ist, die zwischen der Oberseite dieser Verdampfungskammer und ihrer Kondensationskammer hergestellt ist.

11. Wasserdestillationsvorrichtung (100) nach einem der Ansprüche 4 bis 10, welche eine Apparatur zur Konzentration von Industriewasser bildet, **dadurch gekennzeichnet, dass** sie umfasst:
- eine erste Leitung (118) zur Rückgewinnung der konzentrierten wässrigen Lösung, die am Boden der Verdampfungskammer (104) des Rangs 1 strömt, wobei diese Leitung (118) eine Vorrichtung (119) zur natürlichen Kühlung speist, die oberhalb eines Behälters (152) einmündet;
- eine Pumpe (156), um den Inhalt dieses Behälters (152) anzusaugen und ihn unter den hohlen Komponenten in der Kondensationskammer (106) des Rangs 1 zu injizieren, um in geschlossener Schleife in der Apparatur einen Strom der konzentrierten wässrigen Lösung zirkulieren zu lassen;
- eine zweite Leitung (128), um die Evakuierung permanent für eine Rückgewinnung oder für eine Eliminierung des Durchsatzes des erzeugten destillierten Wassers sicherzustellen;
- eine dritte Leitung (158), die mit einem ersten Elektroventil (160) assoziiert ist, um die Evakuierung für eine Rückgewinnung des Volumens der konzentrierten wässrigen Lösung sicherzustellen, die in dem Behälter (152) enthalten ist;
- eine vierte Leitung (164), die mit einem zweiten Elektroventil (166) assoziiert ist, um das Ersetzen des Inhalts des Behälters durch ein neues Volumen von Industriewasser sicherzustellen;
- wobei die beiden Elektroventile (160-166) gemäß einer Periode betrieben werden, die durch die Effizienz der Apparatur bestimmt wird.

## Claims

1. A water distiller (10 or 100 or 200), with saturated hot humid air currents and recovery of latent heat of condensation, of the kind in which:
- a number N of distillation units is provided, the unit in row 1 being the least hot and the unit in row N the hottest,
- each of these N distillation units comprises a pair of vertical chambers, one for water evaporation and the other for vapour condensation, communicating from above;
- each of these N evaporation chambers is occupied by a set of wettable or hydrophilic components (20 or 104 or 210);
- each of these N condensation chambers is occupied by a hollow heat exchange device (22 or 120 or 212), these N devices being connected in series;
- means (38 or 153 or 216) are connected to the apparatus to supply it with a stream of water, with a mass flow rate Q_{E0}, at an initial low temperature T_{E0}, to circulate this stream of water from bottom to top in the N hollow heat exchange devices;
- a boiler (42 or 134 or 226) is connected to the outlet of the N hollow heat exchange devices to bring the water stream at temperature T_{E1} leaving them to a high temperature T_{E2} of less than 100°C;
- means (52 or 142 or 228-236-244-252) are installed in the appliance to spread this hot water at temperature T_{E2} over the top of the components of the evaporation chamber of row N and to cause it to flow along the components of the evaporation chambers of rows (N-1) to 1;
- means (34 and 170-172) or (116 and 148₁₋₄) or (260₁₋₄) are installed in the apparatus for forcing N adjusted flows of saturated moist hot air to circulate, from bottom to top in the N evaporation chambers and from top to bottom in the N condensation chambers, in order to respectively bring the N air currents, circulating at the top of the evaporation chambers, to predetermined temperatures T_{A1} to T_{AN}, said means comprising means for blowing air at the bottom of the rank 1 evaporation chamber and means for adjusting the cross-sections of the communication paths between chambers of the distillation units;
- means for collecting the distilled water flows (56 or 126 or 266) are installed at the bottom of the condensation chamber of row 1;
- means for collecting the flow rates of concentrated aqueous solution (60 or 119 or 254) are installed at the bottom of the row 1 evaporation chamber;
**characterized in that**:
- the N heat exchange devices (221-6 or 120₁₋₄ or 212) have cross-sections and heights substantially identical to those of the N condensation chambers;
- these N heat exchange devices are groups of hollow polymer plates (23, 121, 213), assembled separately at constant pitch, each group being provided with upstream and downstream collectors;
- in the N condensation chambers, the hollow plates are installed vertically.

2. A water distiller (10, or 100 or 200) according to claim 1, **characterized in that** it comprises N perforated plates (25₁₋₄, 123₁₋₄, 257, 190), capable of distributing the total air flows entering the N condensation chambers respectively into substantially equal partial air flows entering the spaces separating the hollow plates (23, 121, 213) of these chambers.

3. A water distiller (10 or 100 or 200) according to claim 2, **characterized in that** in each of the N distillation units:
- the communication between the evaporation and condensation chambers comprises a horizontal elongated rectangular window (170, 150);
- the cross-section of the condensation chamber, the perforated tray (25₁₋₄, 123₁₋₄, 257, 190) and the hollow plates (23, 121, 213) are rectangular;
- the perforated tray is installed without any noticeable lateral leaks and has rows (1921-4) of holes (193) surmounting all the hollow plates (23, 121, 213);
- these holes (193) are oblong and drilled at the assembly pitch of the plates, their width being substantially equal to that of the spaces between the plates.

4. A water distiller according to Claim 1, 2 or 3 of the kind in which:
- the N distillation units are superimposed, forming two evaporation and condensation columns;
- and a fan is installed at the bottom of the evaporation column
**characterized in that**:
* the N evaporation chambers comprise thin planar supports with wettable (210) or hydrophilic (20) faces, installed vertically at a constant pitch.
* the N communications, between the pairs of chambers, are N horizontal rows (170) of vertical slots (172), at the same pitch as the previous one, made in a partition (18) separating the two chambers;
* the fan control (34) is preset and the respective passage sections of the rows of slots (170-172) are fixed;
* this fan control (34) and these slot sections have been established in accordance with the construction specifications resulting from the final manual adjustments of the first unit in a series of identical units.

5. A water distiller according to claim 1, 2 or 3 of the kind in which:
- the N distillation units are superimposed, forming two evaporation and condensation columns;
- the N evaporation chambers are lined with wettable artificial nuts piled in bulk;
- a fan (116) is installed at the bottom of the evaporation column
**characterized in that**:
* the N communications, between the pairs of chambers, are ducts, with an elongated rectangular section, comprising upstream a horizontal perforated zone (170-172), capable of blocking the said nuts and allowing air to pass through, and downstream the said horizontal elongated rectangular window (1501-4).
* in each N conduits (144₁₋₄ - 150₁₋₄), immediately downstream of the perforated area, there is installed a deflector (145₁₋₄ - 146₁₋₄), followed by a partition with a horizontal rectangular slot (170-172), i.e. an adjustable ball valve (1481-3),
* the fan control (116) is preset and the respective widths of these N horizontal slots are fixed;
* this fan control and these slot widths have been established in accordance with the construction specifications derived from the final manual settings of the first unit in a series of identical units.

6. A water distiller, as claimed in claim 1, 2 or 3, of the kind in which the N distillation units are superimposed and constitute two columns, one for evaporation and the other for condensation;
**characterized in that**
- these N distillation stages are separated from each other by (N-1) horizontal partitions;
- two communications, one at the top and one at the bottom, are established between the vertical evaporation and condensation chambers of each distillation stage;
- N fans with fixed or adjustable flow rates, in particular by means of synchronous motors external to the condensation chambers, have their impellers installed in the lower communications of the N distillation stages, to produce N independent air streams circulating respectively in these N stages;
- the sets of hollow components of the condensation chambers of these N distillation stages are connected to each other by tubes passing through these (N-1) horizontal partitions;
- at the top and bottom of the hydrophilic or wettable components of the evaporation chambers of these N distillation stages, means for spreading and collecting the water circulating in the evaporation column are respectively installed, the spreading means of the evaporation chambers of rows (N-1) to 1 being respectively fed by the collecting means of the chambers of rows N to 2.

7. A water distiller (200) according to claim 1 or 2, **characterized in that**:
- the N distillation units (202, 204, 206, 208) are juxtaposed;
- two communications, one at the top and the other at the bottom, are established between the vertical evaporation and condensation chambers of each distillation unit;
- N fans (260₁₋₄, 262₁₋₄, 264₁₋₄) with fixed or adjustable flow rates, in particular by means of synchronous motors (264₁₋₄, 266₁₋₄) external to the condensation chambers, have their impellers (260₁₋₄) installed in the lower communications of the N distillation units, to produce N independent air currents circulating respectively in these N units;
- the N hollow heat exchange devices (212) of these N condensation chambers are connected to each other by (N-1) insulated ducts (220, 222, 224);
- the N sets of hydrophilic or wettable components (212), of the N evaporation chambers, comprise at the top and bottom of their respective ends spreading means (228, 236, 244, 252) and means for collecting water to be distilled (230, 238, 246, 254);
- (N-1) pumps (232, 240, 248) and (N-1) insulated pipes (234, 242, 250) are installed between the N evaporation chambers, for causing the water collected by the collecting means of the distillation units of rows N to 2 to flow into the spreading means of the units of rows (N-1) to 1.

8. Water distiller (200) according to claim 6 or 7, **characterized in that**:
- air currents (arrows 76-78-80) enter this column 16 through the opening 24 at the top of the partition 18 and descend into the condensation column 16;
- in a first apparatus 10 of a series of identical distillers, several thermocouples measuring the temperatures TA1 to TA4 and TA1* to TA4* are installed at remarkable locations of this distiller;
- these thermocouples are connected to a digital conversion and display circuit;
- two thermocouples, respectively installed in hollow metal inserts, sealingly engaged in holes made through the wall of the inlet 38 and outlet 39 ducts of the condensing column 16 measure TE0 and TE1 and a third thermocouple placed in the boiler 40 measures TE2;
- five thermocouples, respectively located in front of the upper 24, lower 26, and intermediate 28, 30, 32 openings of partition 18, measure TA0 to TA4.

9. A water distiller according to claims 6 and 7, **characterized in that** the number of distillation units being even, this apparatus consists of juxtaposed groups each comprising two superimposed units.

10. Water distiller (200) according to one of claims 6 or 7, **characterized in that** the evaporation chamber of each distillation unit being lined with wettable artificial nuts, a demister (145₁₋₄ - 146₁₋₄) is installed in the communication established between the tops of this evaporation chamber and its condensation chamber.

11. A water distiller (100), according to one of claims 4 to 10, constituting an apparatus for concentrating industrial water, **characterized in that** it comprises:
- a first conduit (118) for recovering the concentrated aqueous solution, flowing at the bottom of the evaporation chamber (104) of row 1, this conduit (118) feeding a natural cooling device (119) opening above a tank (152);
- a pump (156) for sucking the contents of this tank (152) and injecting it at the bottom of the hollow components of the condensation chamber (106) of row 1, in order to circulate a stream of concentrated aqueous solution in the apparatus in a closed loop;
- a second conduit (128) for continuously discharging for recovery or disposal the flow of distilled water produced;
- a third conduit (158) associated with a first solenoid valve (160) for discharging for recovery the volume of concentrated aqueous solution contained in the tank (152);
- a fourth conduit (164) associated with a second solenoid valve (166) for providing replacement of the contents of the tank with a new volume of process water;
- the two solenoid valves (160-166) operate for a period determined by the efficiency of the apparatus.
